# EUROPEAN PATENT APPLICATION

(11) **EP 4 703 852 A1**
(43) Date of publication of application: **04.03.2026**
(21) Application number: 24797020.5
(22) Date of filing: 23.04.2024
(51) Int. Cl.: G06F 3/01, B25J 5/00, G06F 3/16, G06N 3/008, G06Q 30/02, G06Q 30/0251, G06Q 50/10, G06Q 50/12, G06Q 50/18, G06Q 50/26, G10L 13/00, G10L 13/08, G10L 15/00, G10L 25/63

(54) **ACTION CONTROL SYSTEM**

(30) Priority: 26.04.2023 JP 2023072217; 27.04.2023 JP 2023073206; 28.04.2023 JP 2023074078; 28.04.2023 JP 2023074098; 28.04.2023 JP 2023074117; 28.04.2023 JP 2023074696; 28.04.2023 JP 2023074837
(71) Applicant: SoftBank Group Corp., Tokyo 105-7537 (JP)
(72) Inventor: SON, Masayoshi, Tokyo 105-7537 (JP); YOSHIDA, Kenichi, Tokyo 105-7537 (JP); YAMAMOTO, Takashi, Tokyo 105-7537 (JP); HATA, Tatsuhiko, Tokyo 105-7537 (JP); SAKATA, Dai, Tokyo 105-7537 (JP)
(74) Representative: SSM Sandmair
(86) International application number: PCT/JP2024/015933
(87) International publication number: WO 2024/225274

(57) **Abstract**

To output an appropriate response corresponding to a state of a user. An action control system includes: a recognition unit that recognizes a state of a user based on detection information detected from the user; and an output controller that causes an electronic device including a text generation model to output a response to the user in accordance with the state of the user recognized by the recognition unit.

## Description

### Field

The present invention relates to an action control system.

### Background

Patent Literature 1 discloses a technique of deciding an appropriate action of a robot in accordance with a state of a user. The known technology of Patent Literature 1 recognizes user's reaction when the robot executes a specific action, and in a case where an action of the robot with respect to the recognized reaction of the user cannot be decided, information related to an action suitable for the recognized state of the user is received from the server to update the action of the robot.

### Citation List

### Patent Literature

Patent Literature 1: JP 6053847 A

### Summary

### Technical Problem

However, there is a case where the known technology might not be able to output an appropriate response according to the state of the user.

### Solution to Problem

According to a first embodiment, an action control system is provided. The action control system includes: a recognition unit that recognizes a state of a user based on detection information detected from the user; and an output controller that causes an electronic device including a text generation model to output a response to the user in accordance with the state of the user recognized by the recognition unit.

### Brief Description of Drawings

FIG. 1 schematically illustrates an example of a system 5 according to a first embodiment.
FIG. 2 schematically illustrates a functional configuration of a robot 100 according to the first embodiment.
FIG. 3 schematically illustrates a data structure of character data 223.
FIG. 4 schematically illustrates an example of an operation flow related to setting of a character.
FIG. 5 schematically illustrates an example of an operation flow performed by the robot 100.
FIG. 6 schematically illustrates a functional configuration of an output unit 290.
FIG. 7 schematically illustrates an example of an operation flow performed by the output unit 290.
FIG. 8 schematically illustrates an example of a hardware configuration of a computer 1200.
FIG. 9 is a diagram illustrating an emotion map on which a plurality of emotions is mapped.
FIG. 10 is a diagram illustrating another example of the emotion map.
FIG. 11 is a diagram illustrating an example of an emotion table.
FIG. 12 is a diagram illustrating an example of an emotion table.
FIG. 13 is an external view and an internal structural view of a stuffed toy according to another embodiment.
FIG. 14 is a rear-front view of a stuffed toy according to another embodiment.
FIG. 15 schematically illustrates a functional configuration of a robot 100 according to a second embodiment.
FIG. 16 schematically illustrates a functional configuration of an event detection unit 291.
FIG. 17 schematically illustrates an example of an operation flow performed by the event detection unit 291.
FIG. 18 schematically illustrates an example of an overall configuration of a system 5 according to a third embodiment.
FIG. 19 schematically illustrates functional block configurations of a robot 100 and a server 300 according to the third embodiment.
FIG. 20 schematically illustrates a functional configuration of a robot 100 according to a fourth embodiment.
FIG. 21 is a diagram for illustrating an example of a robot 100 according to a fourth embodiment.
FIG. 22 schematically illustrates an example of an operation flow performed by the robot 100 according to the fourth embodiment.
FIG. 23 schematically illustrates an example of an overall configuration of a system 5 according to a fifth embodiment.
FIG. 24 schematically illustrates functional block configurations of a robot 100 and a server 300 according to the fifth embodiment.
FIG. 25 schematically illustrates an example of an overall configuration of a system 5 according to a sixth embodiment.
FIG. 26 schematically illustrates functional block configurations of a robot 100 and a server 300 according to the sixth embodiment.
FIG. 27 schematically illustrates a functional configuration of a robot 100 according to a seventh embodiment.
FIG. 28 is a diagram for illustrating an example of a robot 100 according to a seventh embodiment.
FIG. 29 schematically illustrates an example of an operation flow performed by the robot 100 according to the seventh embodiment.

### Description of Embodiments

Hereinafter, the present invention will be described through embodiments of the invention, but the following embodiments do not limit the invention according to the claims. In addition, not all combinations of features described in the embodiments are essential to the solution of the invention.

### (First embodiment)

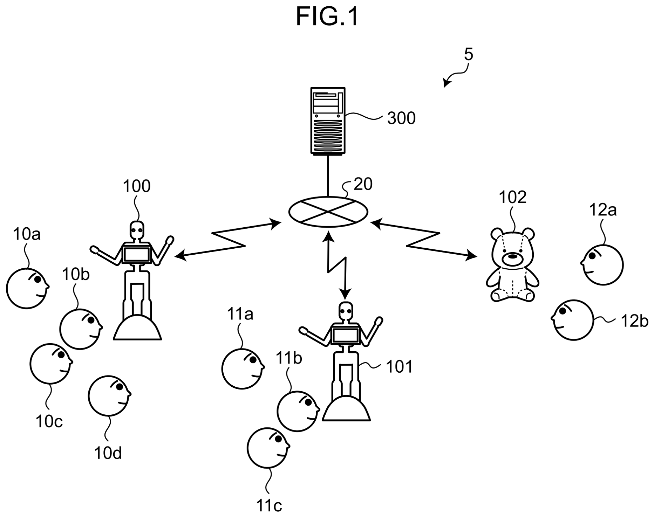

FIG. 1 schematically illustrates an example of a system 5 according to a first embodiment. The system 5 includes a robot 100, a robot 101, a robot 102, each being an example of an electronic device, and a server 300. A user 10a, a user 10b, a user 10c, and a user 10d are users of the robot 100. A user 11a, a user 11b, and a user 11c are users of the robot 101. A user 12a and a user 12b are users of the robot 102. In the description of the first embodiment, the user 10a, the user 10b, the user 10c, and the user 10d may be collectively denoted as a user 10. Furthermore, the user 11a, the user 11b, and the user 11c may be collectively denoted as a user 11. The user 12a and the user 12b may be collectively denoted as a user 12. The robot 101 and the robot 102 have substantially the same functions as those of the robot 100. Therefore, the system 5 will be described mainly focusing on the function of the robot 100.

The appearance of the robot may imitate a figure of a person like the robot 100 and the robot 101, or may be a stuffed toy like the robot 102. The robot 102 has an external appearance of a stuffed toy, and thus is considered to be familiar to children in particular.

The robot 100 has a conversation with the user 10 and provides a video to the user 10. At this time, the robot 100 performs conversation with the user 10 and provides a video, etc. to the user 10 in cooperation with the server 300 and the like communicable via a communication network 20. For example, the robot 100 not only performs self-learning of appropriate conversations, but also performs learning in cooperation with the server 300 so as to achieve more appropriate conversations with the user 10. Furthermore, the robot 100 causes the server 300 to record the captured video data, etc. of the user 10, requests the video data, etc. from the server 300 as necessary, and provides the video data, etc. to the user 10.

Furthermore, the robot 100 has emotion values indicating types of its own emotions. For example, the robot 100 has emotion values indicating the intensity of each emotion of "delighted", "angry", "sad", "joyful", "pleasant", "unpleasant", "secure", "anxious", "sorrowful", "excited", "worried", "relieved", "fulfilled", "empty", and "neutral". For example, when the robot 100 has a conversation in a state of having a high emotion value of excitement with the user 10, the robot emits a voice at a high speed. In this manner, the robot 100 can express its own emotion by action.

Furthermore, the robot 100 may be configured to decide the action of the robot 100 corresponding to the emotion of the user 10 by using matching of a text generation model (also referred to as an Artificial Intelligence (AI) chat engine) with an emotion engine. Specifically, the robot 100 may be configured to recognize an action of the user 10, determine an emotion of the user 10 behind the action of the user, and decide an action of the robot 100 corresponding to the determined emotion.

More specifically, when having recognized an action of the user 10, the robot 100 uses a preset text generation model to automatically generate action content to be taken by the robot 100 with respect to the action of the user 10. The text generation model may be construed as an algorithm and an operation for automatic dialog processing with texts. Since the text generation model is known as disclosed in JP 2018-081444 A, for example, a detailed description thereof will be omitted. Such a text generation model is configured by a Large Language Model (LLM). As described above, in the first embodiment, by combining a Large Language Model and an emotion engine, it is possible to reflect the emotions of the user 10 and the robot 100 and various linguistic information in the action of the robot 100. That is, according to the first embodiment, a synergistic effect can be obtained by combining the text generation model and the emotion engine.

Here, each robot has an output function of recognizing the state of the user and outputting a response according to the recognized state. For example, since each robot can recognize the emotion of the user who has visited a restaurant or the like and make a response (customer service or the like) corresponding to the recognized emotion, it is possible to provide a human-like customer service.

Furthermore, the robot 100 has a function of recognizing an action of the user 10. The robot 100 recognizes the action of the user 10 by analyzing a face image of the user 10 acquired by a camera function and the voice of the user 10 acquired by a microphone function. The robot 100 decides an action to be executed by the robot 100 based on the recognized action of the user 10 or the like.

The robot 100 stores a rule defining an action to be executed by the robot 100 based on the emotion of the user 10, the emotion of the robot 100, and the action of the user 10, and takes various actions in accordance with the rule.

Specifically, the robot 100 has a reaction rule for deciding an action of the robot 100 based on the emotion of the user 10, the emotion of the robot 100, and the action of the user 10. The reaction rule defines, for example, that in a case where the action of the user 10 is "smiling", the action of the robot 100 is to be an action of "smiling". In addition, the reaction rule defines, for example, that in a case where the action of the user 10 is "getting angry", the action of the robot 100 is to be an action of "apologizing". Furthermore, the reaction rule defines, for example, that in a case where the action of the user 10 is "asking a question", the action of the robot 100 is to be an action of "answering the question". The reaction rule defines, for example, that in a case where the action of the user 10 is "expressing sorrow", the action of the robot 100 is to be an action of "offering words".

Based on the reaction rule, having recognized that the action of the user 10 is "getting angry", the robot 100 selects an action of "apologizing" prescribed in the reaction rule, as the action to be executed by the robot 100. For example, when selecting the action of "apologizing", the robot 100 takes an action of "apologizing" and outputs a voice expressing a word of "apologizing".

Furthermore, it is prescribed that, when a condition that the emotion of the robot 100 is "neutral" (that is, "delighted" =0, "angry" =0, "sad" =0, and "joyful" =0) and the state of the user 10 is "alone and looks sad" is satisfied, it is possible to execute an emotional change in which the emotion of the robot 100 turns to "worried" and an action of "offering words".

When the robot 100 recognizes that the current emotion of the robot 100 is "neutral" and the user 10 is alone and looks sad, the emotion value of "sad" of the robot 100 is increased based on the reaction rule. Furthermore, the robot 100 selects an action of "offering words" prescribed in the reaction rule as an action to be executed on the user 10. For example, when the action of "offering words" is selected, the robot 100 outputs a word "What's wrong?" indicating a concern in a concerned voice obtained by voice conversion.

Furthermore, the robot 100 transmits, to the server 300, user reaction information indicating that a positive reaction has been obtained from the user 10 by this action. The user reaction information includes, for example, a user action of "getting angry", an action of the robot 100 of "apologizing", a positive reaction of the user 10, and an attribute of the user 10.

The server 300 stores the user reaction information received from the robot 100. The server 300 receives and stores the user reaction information not only from the robot 100 but also from the robot 101 and the robot 102 individually. Subsequently, the server 300 analyzes the user reaction information from the robot 100, the robot 101, and the robot 102, and updates the reaction rule.

The robot 100 inquires the server 300 about the updated reaction rule to receive the updated reaction rule from the server 300. The robot 100 incorporates the updated reaction rule into the reaction rule stored in the robot 100. With this configuration, the robot 100 can incorporate the reaction rule acquired by the robot 101, the robot 102, or the like into its own reaction rule.

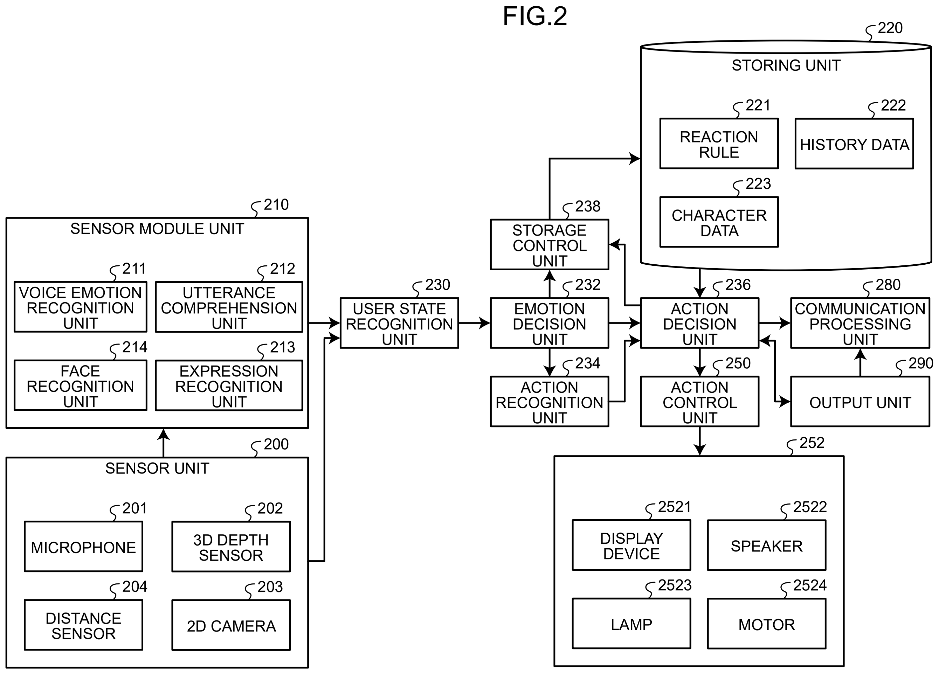

FIG. 2 schematically illustrates a functional configuration of a robot 100. The robot 100 includes a sensor unit 200, a sensor module unit 210, a storing unit 220, a user state recognition unit 230, an emotion decision unit 232, an action recognition unit 234, an action decision unit 236, a storage control unit 238, an action control unit 250, a control target 252, a communication processing unit 280, and an output unit 290.

The control target 252 includes a display device 2521, a speaker 2522, a lamp 2523 (for example, the LED for the eyes), and motors 2524 that drive parts such as arms, hands, and legs. The posture and gesture of the robot 100 are controlled by controlling the motors 2524 in the parts such as an arm, a hand, and a leg. Some of the emotions of the robot 100 can be expressed by controlling these motors 2524. The expression of the robot 100 can also be expressed by controlling the light emission state of the LED for the eyes of the robot 100. The posture, gesture, and expression of the robot 100 are examples of attitude of the robot 100. The display device 2521 may be disposed at any position of the robot 100, such as the chest of the robot 100.

The sensor unit 200 includes a microphone 201, a 3D depth sensor 202, a 2D camera 203, and a distance sensor 204. The microphone 201 continuously detects a voice and outputs voice data. The microphone 201 may be provided on the head of the robot 100 and may have a function of performing binaural recording. The 3D depth sensor 202 detects the contour of an object by continuously projecting an infrared pattern and analyzing the infrared pattern from the infrared image continuously captured by the infrared camera. The 3D depth sensor 202 includes an infrared sensor. The 2D camera 203 is an example of an image sensor. The 2D camera 203 captures an image with visible light and generates video information of visible light. The distance sensor 204 detects a distance to an object by projecting a laser and an ultrasonic wave, for example. The sensor unit 200 may further include a clock, a gyro sensor, a touch sensor, a sensor for motor feedback, and the like.

Among the components of the robot 100 illustrated in FIG. 2, the components other than the control target 252 and the sensor unit 200 are examples of components included in the action control system in the robot 100. The action control system of the robot 100 controls the control target 252 as a target.

The storing unit 220 includes a reaction rule 221, history data 222, and character data 223. The history data 222 includes past emotion values and action history of the user 10. The emotion value and the action history are recorded for each user 10 by being associated with identification information of the user 10, for example. At least a part of the storing unit 220 is implemented by a storage medium such as memory. A person DB that stores a face image of the user 10, attribute information of the user 10, and the like may be included. Among the components of the robot 100 illustrated in FIG. 2, the functions of the components other than the control target 252, the sensor unit 200, and the storing unit 220 can be implemented by the CPU operating based on a program. For example, the functions of these components can be implemented as the operation of the CPU by basic software (OS) and a program operating on the OS.

The character data 223 is data in which a character and an age are associated with each other. For example, the character is a person or the like appearing in a piece of content such as an existing animation, a video game, a cartoon, or a movie. Furthermore, the character may be an animal and a plant having a personality, or may be an inanimate object (such as a robot).

For example, the age (use age) associated with the character in the character data 223 is decided based on the age group of the viewer assumed as the target of the content in which the character appears.

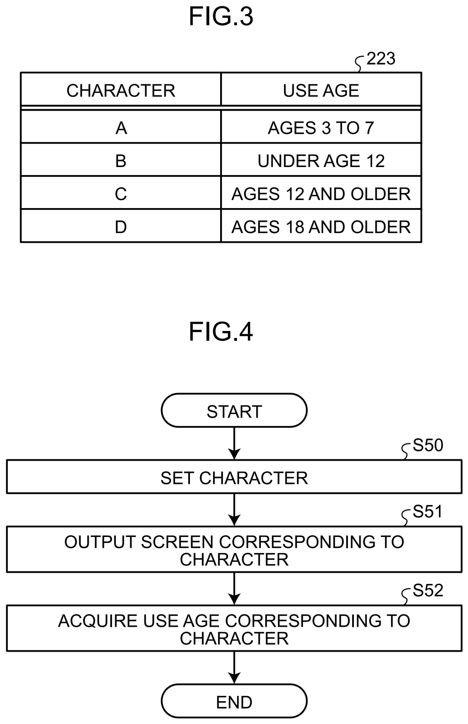

For example, it is assumed that a character "A" appears in an animation for kindergarten children. In this case, as illustrated in FIG. 3, the character "A" is associated with a use age of "ages 3 to 7".

Furthermore, for example, it is assumed that a movie in which a character "C" appears includes a violent scene and is not suitable for viewing by young children. In this case, as illustrated in FIG. 3, the character "C" is associated with a use age of "ages 12 and older".

The age in the character data 223 may be defined based on an age rating by a rating organization such as Pan European Game Information (PEGI), a Film Classification and Rating Organization, or a Computer Entertainment Rating Organization (CERO). Furthermore, the use age may be determined by a range such as "ages 3 to 5" or "ages 12 and older", or may be determined by one value such as "age 10" or "age 15".

The sensor module unit 210 includes a voice emotion recognition unit 211, an utterance comprehension unit 212, an expression recognition unit 213, and a face recognition unit 214. Information detected by the sensor unit 200 is input to the sensor module unit 210. The sensor module unit 210 analyzes the information detected by the sensor unit 200 and outputs an analysis result to the user state recognition unit 230.

The voice emotion recognition unit 211 of the sensor module unit 210 analyzes the voice of the user 10 detected by the microphone 201 to recognize the emotion of the user 10. For example, the voice emotion recognition unit 211 extracts a feature such as a frequency component of a voice and recognizes an emotion of the user 10 based on the extracted feature. The utterance comprehension unit 212 analyzes the voice of the user 10 detected by the microphone 201 and outputs textual information indicating utterance content of the user 10.

The expression recognition unit 213 recognizes the expression of the user 10 and the emotion of the user 10 from the image of the user 10 captured by the 2D camera 203. For example, the expression recognition unit 213 recognizes the expression and emotion of the user 10 based on the shapes, positional relationships, and the like of the eyes and the mouth.

The face recognition unit 214 recognizes the face of the user 10. The face recognition unit 214 recognizes the user 10 by checking the match between a face image stored in a person DB (not illustrated) and a face image of the user 10 captured by the 2D camera 203.

The user state recognition unit 230 recognizes the state of the user 10 based on the information analyzed by the sensor module unit 210. For example, processing mainly related to perception is performed using the analysis result of the sensor module unit 210. For example, perception information such as "Daddy is alone" and "Daddy is not smiling with probability of 90%" is generated. Processing of understanding the meaning of the generated perception information is performed. For example, semantic information such as "Daddy is alone and looks sad." is generated.

The emotion decision unit 232 decides an emotion value indicating the emotion of the user 10 based on the information analyzed by the sensor module unit 210 and the state of the user 10 recognized by the user state recognition unit 230. For example, the information analyzed by the sensor module unit 210 and the recognized state of the user 10 are input to a neural network trained in advance, and an emotion value indicating the emotion of the user 10 is acquired.

Here, the emotion value indicating the emotion of the user 10 is a value indicating whether the emotion of the user is positive/negative. For example, the emotion of the user is a bright emotion accompanied with pleasure or comfort, such as "delighted", "joyful", "pleasant", "secure", "excited" "relieved" and "fulfilled", the emotion value indicates a positive value which becomes larger as the emotion is brighter. When the user's emotion is a negative emotion, such as "angry", "sad", "unpleasant", "anxious", "sorrowful", "worried", and "empty", the value indicates a negative value, and the absolute value of the negative value is larger as the user feels more unpleasant. In a case where the user's emotion is not any of the above ("neutral"), the value indicates a value of 0.

In addition, the emotion decision unit 232 decides an emotion value indicating the emotion of the robot 100 based on the information analyzed by the sensor module unit 210 and the state of the user 10 recognized by the user state recognition unit 230.

The emotion value of the robot 100 includes the emotion value for each of a plurality of emotion classifications, and is, for example, a value (0 to 5) indicating the intensity of each of items of "delighted", "angry", "sad", and "joyful".

Specifically, the emotion decision unit 232 decides an emotion value indicating the emotion of the robot 100 in accordance with a rule for updating the emotion value of the robot 100 prescribed in association with the information analyzed by the sensor module unit 210 and the state of the user 10 recognized by the user state recognition unit 230.

For example, in a case where the user state recognition unit 230 recognizes that the user 10 looks sad, the emotion decision unit 232 increases the emotion value of "sad" of the robot 100. In a case where the user state recognition unit 230 recognizes that the user 10 is now smiling, the emotion value of "delighted" of the robot 100 is increased.

The emotion decision unit 232 may decide the emotion value indicating the emotion of the robot 100 in further consideration of the state of the robot 100. For example, in a case where the remaining battery level of the robot 100 is low, a case where the surrounding environment of the robot 100 is completely dark, or the like, the emotion value of "sad" of the robot 100 may be increased. Furthermore, in the case of the user 10 who desires to continue the dialog even though the remaining battery level is low, the emotion value of "angry" may be increased.

The action recognition unit 234 recognizes an action of the user 10 based on the information analyzed by the sensor module unit 210 and the state of the user 10 recognized by the user state recognition unit 230. For example, the information analyzed by the sensor module unit 210 and the recognized state of the user 10 are input to a neural network trained in advance to acquire the probability of each of a plurality of predetermined action classifications (for example, "smile", "get angry", "ask a question", and "expressing sorrow"), and the action classification having the highest probability is to be recognized as the action of the user 10.

As described above, in the first embodiment, the robot 100 acquires the utterance content of the user 10 after specifying the user 10. In the acquisition and use of the utterance content, the action control system of the robot 100 according to the first embodiment considers protection of personal information and privacy of the user 10 in addition to acquisition of necessary consent according to laws and regulations from the user 10.

Based on the current emotion value of the user 10 decided by the emotion decision unit 232, the history data 222 of the past emotion values decided by the emotion decision unit 232 before the current emotion value of the user 10 is decided, and the emotion value of the robot 100, the action decision unit 236 decides an action corresponding to the action of the user 10 recognized by the action recognition unit 234. While the first embodiment will describe a case where the action decision unit 236 uses one most recent emotion value included in the history data 222 as the past emotion value of the user 10, the disclosed technology is not limited to this aspect. For example, the action decision unit 236 may use a plurality of most recent emotion values as the past emotion values of the user 10, or may use emotion values that are earlier by a unit period such as a day before.
Furthermore, the action decision unit 236 may decide an action corresponding to the action of the user 10 in further consideration of the history of the past emotion values of the robot 100 in addition to the current emotion value of the robot 100. The action decided by the action decision unit 236 includes a gesture performed by the robot 100 or utterance content of the robot 100.

The action decision unit 236 according to the first embodiment decides the action of the robot 100 as the action corresponding to the action of the user 10 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action decision unit 236 decides an action for changing the emotion value of the user 10 to a positive value as the action corresponding to the action of the user 10.

The action decision unit 236 may decide an action corresponding to the action of the user 10 based on the emotion of the robot 100. For example, when the emotion value of "angry" or "sad" of the robot 100 has increased in a case where the robot is abused by the user 10, in a case where the user 10 takes an arrogant attitude (that is, in a case where the user's reaction is unfavorable), in a case where the voice of the user 10 cannot be detected due to surrounding noise, in a case where the remaining battery level of the robot 100 is low, or the like, the action decision unit 236 may decide an action corresponding to the increase in the emotion value of "angry" or "sad" as the action corresponding to the action of the user 10. Furthermore, in a case where the emotion value of "delighted" or "joyful" of the robot 100 has increased in a case where the user's reaction is favorable, a case where the remaining battery level of the robot 100 is high, or the like, the action decision unit 236 may decide an action corresponding to the increase in the emotion value of "delighted" or "joyful" as an action corresponding to the action of the user 10. The action decision unit 236 may decide an action different from the action toward the user 10 that has increased the emotion values of "angry" and "sad" of the robot 100, as an action toward the user 10 that has increased the emotion values of "delighted" and "joyful" of the robot 100. In this manner, the action decision unit 236 may decide various actions depending on the emotion itself of the robot 100 itself or how the user 10 has changed the emotion of the robot 100 by the action of the user 10.

The reaction rule 221 defines the action of the robot 100 corresponding to the combination of the past emotion value and the current emotion value of the user 10, the emotion value of the robot 100, and the action of the user 10. For example, in a case where the past emotion value of the user 10 is a positive value, the current emotion value is a negative value, and the action of the user 10 is expressing sorrow, a combination of a gesture and utterance content to be used at the time of offering words with gesture to encourage the user 10 is prescribed as the action of the robot 100.

For example, in the reaction rule 221, the action of the robot 100 is determined for all combinations of the pattern of the emotion value of the robot 100 (1296 patterns being the fourth power of six values, namely, values "0" to "5" of "delighted", "angry", "sad", and "joyful"), the pattern of the combination of the past emotion value and the current emotion value of the user 10, and the action pattern of the user 10. That is, for each pattern of the emotion value of the robot 100, the action of the robot 100 corresponding to the action pattern of the user 10 is determined for each of the plurality of combinations such as the case where the combination of the past emotion value and the current emotion value of the user 10 include combinations of a negative value and a negative value, a negative value and a positive value, a positive value and a negative value, a positive value and a positive value, a negative value and a neutral value, and a neutral value and a neutral value. In a case where the user 10 has made an utterance that intends to have a conversation continued from a past topic such as "I want to talk about the topic I discussed earlier", for example, the action decision unit 236 may transition to the operation mode of deciding the action of the robot 100 using the history data 222.

The reaction rule 221 may prescribe at least one of a gesture and statement content as an action of the robot 100 for each of patterns (1296 patterns) of the emotion value of the robot 100 at the maximum. Alternatively, the reaction rule 221 may prescribe at least one of a gesture and statement content as an action of the robot 100 for each of the groups of the patterns of the emotion values of the robot 100.

The strength of a gesture is prescribed for each gesture included in the action of the robot 100 prescribed in the reaction rule 221. The strength of utterance content is prescribed for each utterance content included in the action of the robot 100 prescribed in the reaction rule 221.

The storage control unit 238 decides whether to store data including the action of the user 10 in the history data 222 based on the strength of the action prescribed for the action decided by the action decision unit 236 and the emotion value of the robot 100 decided by the emotion decision unit 232.

Specifically, in a case where the total value of the sum of the emotion values for each of the plurality of emotion classifications of the robot 100 and the strength that is the sum of the strength predetermined for the gesture included in the action decided by the action decision unit 236 and the strength predetermined for the utterance content included in the action decided by the action decision unit 236 is a threshold or more, it is decided to store data including the action of the user 10 in the history data 222.

Having decided to store the data including the action of the user 10 in the history data 222, the storage control unit 238 stores the action decided by the action decision unit 236, the information (for example, any surrounding information including data such as a voice, an image, and a smell of the place) analyzed by the sensor module unit 210 from the current time point to a certain period before, and the state of the user 10 (for example, the expression and emotion of the user 10) recognized by the user state recognition unit 230 in the history data 222.

The action control unit 250 controls the control target 252 based on the action decided by the action decision unit 236. For example, when the action decision unit 236 has determined an action including utterance, the action control unit 250 controls to output a voice from a speaker included in the control target 252. At this time, the action control unit 250 may decide the speech speed of the voice based on the emotion value of the robot 100. For example, the action control unit 250 decides the speech speed such that the larger the emotion value of the robot 100, the higher the utterance speed will be. In this manner, the action control unit 250 decides the execution mode of the action decided by the action decision unit 236 based on the emotion value decided by the emotion decision unit 232.

The action control unit 250 may recognize a change in emotion of the user 10 about the execution of the action decided by the action decision unit 236. For example, the change in emotion may be recognized based on the voice or expression of the user 10. In addition, a change in emotion of the user 10 may be recognized based on detection of an impact by the touch sensor included in the sensor unit 200. In a case where an impact is detected by the touch sensor included in the sensor unit 200, it is allowable to recognize that the emotion of the user 10 is worsened, or in a case where it is determined that the reaction of the user 10 is smiling or delighted from the detection result of the touch sensor included in the sensor unit 200, it is allowable to recognize that the emotion of the user 10 is improved. Information indicating the reaction of the user 10 is output to the communication processing unit 280.

Furthermore, after the action control unit 250 executes the action decided by the action decision unit 236 in the execution mode decided in accordance with the emotion of the robot 100, the emotion decision unit 232 further changes the emotion value of the robot 100 based on the user's reaction to the execution of the action. Specifically, in a case where the user's reaction to the action decided by the action decision unit 236 performed on the user in the execution mode decided by the action control unit 250 is not bad, the emotion decision unit 232 increases the emotion value of "delighted" of the robot 100; in a case where the user's reaction to the action decided by the action decision unit 236 performed on the user in the execution mode decided by the action control unit 250 is bad, the emotion decision unit 232 increases the emotion value of "sad" of the robot 100.

Furthermore, the action control unit 250 expresses the emotion of the robot 100 based on the decided emotion value of the robot 100. For example, when having increased the emotion value of "delighted" of the robot 100, the action control unit 250 controls the control target 252 to cause the robot 100 to make a gesture of delight. Furthermore, when having increased the emotion value of "sad" of the robot 100, the action control unit 250 controls the control target 252 such that the posture of the robot 100 takes a head lowering posture.

The communication processing unit 280 is responsible for communication with the server 300. As described above, the communication processing unit 280 transmits the user reaction information to the server 300. Furthermore, the communication processing unit 280 receives the updated reaction rule from the server 300. When having received the updated reaction rule from the server 300, the communication processing unit 280 updates the reaction rule 221.

The output unit 290 implements the above-described output function. Details of the output unit 290 will be described below.

The server 300 performs communication between the robots (the robot 100, the robot 101, and the robot 102) and the server 300, receives the user reaction information transmitted from the robot 100, and updates the reaction rule based on the reaction rule including the action for which a positive reaction has been obtained.

### (Action decision based on character)

The above has described a case where the action decision unit 236 decides the action of the robot 100 based on the state recognized by the user state recognition unit 230. On the other hand, the action decision unit 236 may decide the action of the robot 100 based on not only the state of the user but also a character that has been set. At this time, the action decision unit 236 may acquire the age (use age) associated with the character from the character data 223, and decide the action of the robot 100 based on the acquired use age.

That is, the action decision unit 236 decides the action of the robot 100 based on the state recognized by the user state recognition unit 230 and on the character that has been set or the age associated with the character. This configuration enables the robot 100 to execute an appropriate action according to the age of the user. In particular, it is possible to restrict actions by the robot 100 that are not suitable for younger users (for example, outputting violent content).

In the system 5, a character is set in advance. The character setting is input as a prompt (instruction). The input of the prompt may be performed via an input device provided in the robot 100 or may be performed via an external device such as a server communicably connected to the robot 100. Furthermore, in the prompt, a name of a character may be specified, or an ID determined for each character may be designated.

For example, the action decision unit 236 decides an action to output a screen indicating the appearance of the character or a color according to the character on the display device 2521 (an example of an output device) provided on the robot. The color corresponding to the character is a theme color or the like that is associated with the character. This makes it possible for the user to obtain a feeling of having a dialog with the character.

Furthermore, for example, the action decision unit 236 decides an action to output information to the display device 2521 or the speaker 2522 (an example of an output device) provided in the robot 100 by the mode according to the use age. For example, the action decision unit 236 changes the voice of the robot 100 emitted from the speaker 2522 to the tone of the character.

Furthermore, for example, the action decision unit 236 decides an action of outputting a voice or a message by a text using words corresponding to the use age. Here, it is assumed that usable words for each age are set in advance. The action decision unit 236 acquires the use age from the character data 223.

For example, it is assumed that words "What's wrong?" and "Is there anything I can do for you?" are stored in the storing unit 220 in advance as words to be output when the robot 100 selects the action of "offering words". Furthermore, it is assumed that the age of "ages under 12" is associated with "What's wrong?" and the age of "ages 12 and older" is associated with "Is there anything I can do for you?". For example, the action decision unit 236 decides to output the word "Is there anything I can do for you?" when the use age corresponds to "ages 18 and older". For example, the action decision unit 236 decides to output the word "What's wrong?" when the use age corresponds to "ages 3 to 7".

In this manner, by changing the tone of the voice and the words to be output in accordance with the use age, it is possible to improve the familiarity for the user of the younger age while restricting the action not suitable for the user of the younger age in particular.

Furthermore, the action decision unit 236 decides an action of outputting content corresponding to the character to an output device (such as the display device 2521) provided in the robot 100. For example, the action decision unit 236 decides an action to display, on the display device 2521, video content (such as movies and animations) in which a character appears.

Furthermore, the action decision unit 236 may decide an action of outputting educational content according to the use age. Here, the educational content is text, video, and voice related to learning subjects such as English, arithmetic, National language, science, and society. Furthermore, the educational content may be interactive content that allows the user to input their answer to a problem. For example, the action decision unit 236 decides an action to display the text of the calculation problem corresponding to the grade corresponding to the use age on the display device 2521. For example, the action decision unit 236 decides to display an addition problem when the use age is "ages under 8", and decides to display a multiplication problem when the use age is "ages 8 and older".

Furthermore, the action decision unit 236 may decide an action of outputting content corresponding to the use age rather than character to the output device provided in the robot 100. The content in this case may be a piece of content in which a character appears, or may be a piece of content that does not depend on a character, such as a generally known folk tale or fairy tale.

The content corresponding to a character, and the grade and educational content according to the use age may be stored in the storing unit 220 in advance, or may be acquired from an external device such as a server communicably connected to the robot 100.

FIG. 4 schematically illustrates an example of an operation flow related to setting of a character. Note that "S" in the operation flow represents a step to be executed.

In step S50, the robot 100 receives character setting. In step S51, the robot 100 outputs a screen (for example, a screen displaying an appearance of a character) corresponding to the character.

In step S52, the action decision unit 236 acquires the use age corresponding to the character that has been set, from the character data 223.

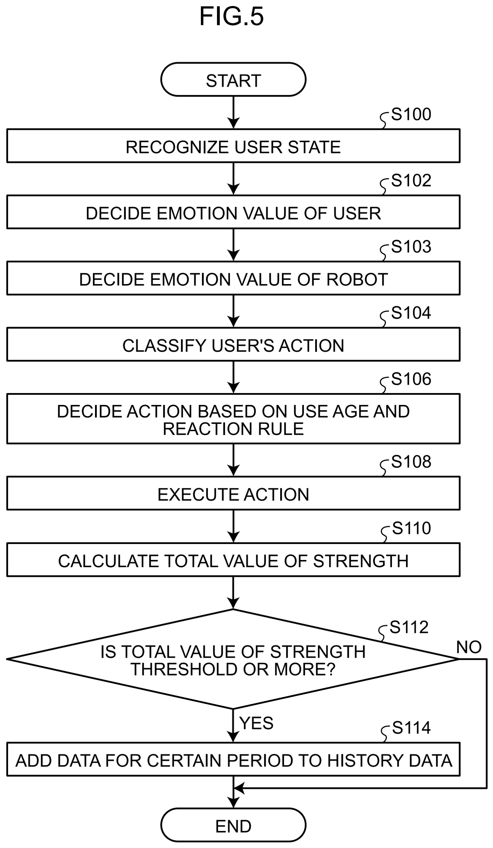

FIG. 5 schematically illustrates an example of an operation flow related to an operation of deciding an action in the robot 100. The operation flow illustrated in FIG. 5 is repeatedly executed. At this time, it is assumed that information analyzed by the sensor module unit 210 is input. Note that "S" in the operation flow represents a step to be executed.

First, in step S100, the user state recognition unit 230 recognizes the state of the user 10 based on the information analyzed by the sensor module unit 210.

In step S102, the emotion decision unit 232 decides an emotion value indicating the emotion of the user 10 based on the information analyzed by the sensor module unit 210 and the state of the user 10 recognized by the user state recognition unit 230.

In step S103, the emotion decision unit 232 decides an emotion value indicating the emotion of the robot 100 based on the information analyzed by the sensor module unit 210 and the state of the user 10 recognized by the user state recognition unit 230. The emotion decision unit 232 adds the decided emotion value of the user 10 to the history data 222.

In step S104, the action recognition unit 234 recognizes the action classification of the user 10 based on the information analyzed by the sensor module unit 210 and the state of the user 10 recognized by the user state recognition unit 230.

In step S106, the action decision unit 236 decides the action of the robot 100 based on the use age acquired in step S52 in FIG. 4, the combination of the current emotion value of the user 10 decided in step S102 in FIG. 5 and the past emotion value included in the history data 222, the emotion value of the robot 100, the action of the user 10 recognized by the action recognition unit 234, and the reaction rule 221.

In step S108, the action control unit 250 controls the control target 252 based on the action decided by the action decision unit 236.

In step S110, the storage control unit 238 calculates a total value of the strength based on the strength of the action predetermined for the action decided by the action decision unit 236 and the emotion value of the robot 100 decided by the emotion decision unit 232.

In step S112, the storage control unit 238 determines whether the total value of the strength is a threshold or more. In a case where the total value of the strength is less than the threshold, the data including the action of the user 10 is not stored in the history data 222, and the processing ends. In contrast, when the total value of the strength is the threshold or more, the processing proceeds to step S114.

In step S114, the action decided by the action decision unit 236, the information analyzed by the sensor module unit 210 from the current time point to a certain period before, and the state of the user 10 recognized by the user state recognition unit 230 are to be stored in the history data 222.

As described above, according to the robot 100, the emotion value indicating the emotion of the robot 100 is decided based on the user state, and whether to store data including the action of the user 10 in the history data 222 is decided based on the emotion value of the robot 100. This makes it possible to suppress the capacity of the history data 222 that stores data including the action of the user 10. In addition, for example, when the robot 100 determines, after 10 years, that the user state is the same as the user state at 10 years before, the robot 100 reads the history data 222 of 10 years before, and thus, can present, to the user 10, the state of the user 10 at 10 years before (for example, the expression, emotion, and the like of the user 10), and can further present any surrounding information such as data of a voice, an image, and a smell, and the like at the situation.

Furthermore, according to the robot 100, it is possible to cause the robot 100 to execute an appropriate action in response to the action of the user 10. In known technologies, an action of the user is classified to determine an action of the robot including an expression or an appearance of the robot. In contrast, the robot 100 decides the current emotion value of the user 10, and executes an action on the user 10 based on the past emotion value and the current emotion value. Therefore, for example, in a case where the user 10 who looked happy the day before is depressed the next day, the robot 100 can perform utterance "You looked happy yesterday. What's wrong with you today?". Furthermore, the robot 100 can also perform an utterance with a gesture. Furthermore, for example, in a case where the user 10 who was depressed the day before looks happy the next day, the robot 100 can perform utterance, "You were depressed yesterday, but you look happy today, don't you?". Furthermore, for example, in a case where the user 10 who looked happy yesterday looks happier the next day than the day before, the robot 100 can perform utterance such as "You look happier today than yesterday. Did something good happen to you more than yesterday?" Furthermore, when the user 10 has an emotion value of 0 or more and is continuously in a state where the fluctuation range of the emotion value is within a certain range, for example, the robot 100 can make an utterance such as "Recently, you are stably in good mood." to the user 10.

Furthermore, for example, in a case where the robot 100 asks the user 10 a question "Have you finished the homework you mentioned yesterday?" and an answer of "I have finished it" is obtained from the user 10, the robot 100 can make a positive utterance such as "Good for you!" and make a positive gesture such as applause or thumbs-up. Furthermore, for example, when the user 10 utters "The presentation we discussed the day before yesterday went well", the robot 100 can make a positive utterance such as "Good job!" and also make the above positive gesture. In this manner, by the action taken by the robot 100 based on the history of the state of the user 10, it is expected that the user 10 feels a sense of closeness to the robot 100.

While the above embodiment is a case where the robot 100 recognizes the user 10 using the face image of the user 10, the disclosed technology is not limited to this aspect. For example, the robot 100 may recognize the user 10 using a voice uttered by the user 10, a mail address of the user 10, an ID of an SNS of the user 10, an ID card incorporating a wireless IC tag possessed by the user 10, or the like.

### (Output of response)

The output unit 290 will be described in detail. Here, the output unit 290 is provided in the robot 100 and causes the robot 100 to output a response.

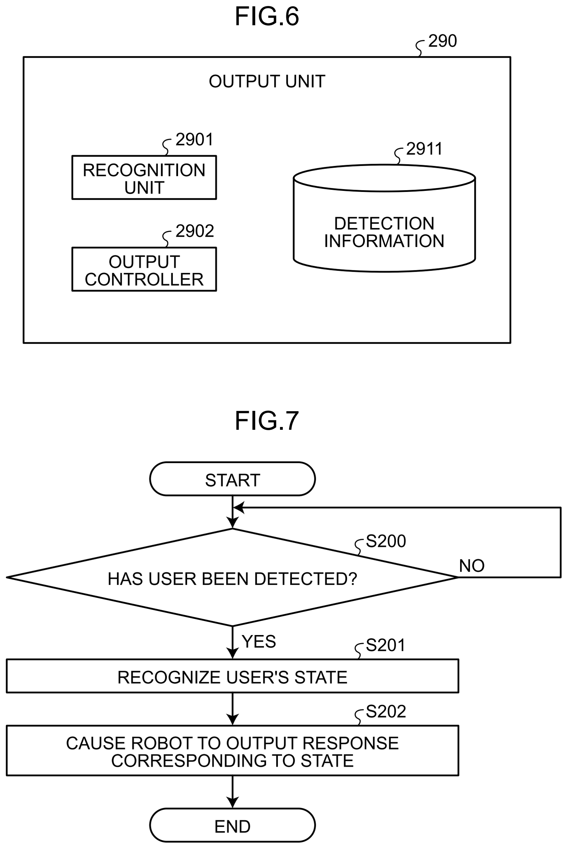

As illustrated in FIG. 6, the output unit 290 includes a recognition unit 2901 and an output controller 2902. In addition, the output unit 290 stores detection information 2911.

Each component of the output unit 290 is implemented by the CPU operating based on a program. For example, the functions of these components can be implemented as the operation of the CPU by basic software (OS) and a program operating on the OS. The detection information 2911 is implemented by a storage medium such as memory.

For example, the recognition unit 2901 recognizes the state of the user 10 based on the detection information detected from the user 10. Subsequently, the output controller 2902 causes the robot 100 equipped with a text generation model to output a response to the user 10 in accordance with the state of the user 10 recognized by the recognition unit 2091. As a specific example, the recognition unit 2901 recognizes the state of the user 10 who has visited a restaurant or the like based on the detection information. The output controller 2902 causes the robot 100 to output a brief conversation or explanation to the user 10 in a hurry. On the other hand, the output controller 2902 causes the robot 100 to output, to the user 10 who wants to talk, a customer service or explanation while having a small talk. In addition, the output controller 2902 can also cause the robot 100 to output emotional gestures. With this configuration, the robot 100 can provide a human-like customer service according to the topic with the user 10 and the situation.

Furthermore, for example, the recognition unit 2901 recognizes the emotion of the user 10 based on the detection information. Subsequently, the output controller 2902 causes the robot 100 to output a response to the user 10 in accordance with the user's emotion. As a specific example, in a case where the emotion of the user 10 is "delighted", the output controller 2902 can cause the robot 100 to output a positive gesture or a positive utterance corresponding to the emotion, making it possible to provide a human-like customer service according to the emotion of the user 10.

Furthermore, for example, the output controller 2902 causes the robot 100 to output a response to the user 10 in accordance with the history of the detection information accumulated in the detection information 2911 and the state of the user 10. With this configuration, the robot 100 can serve a customer with a most appropriate affirmative interjection while listening to a complaint of a customer, as in the case where a manager of a pub and a cafe has conventionally performed, for example. In addition, in the case of the complaint continued from the previous visit, the robot 100 can make a response based on the content of the past complaint, with reference to the history of the detection information indicating the past talk.

Furthermore, for example, the recognition unit 2901 recognizes whether the user 10 is lost in a route to the destination based on detection information. Subsequently, in a case where the user 10 is lost in the route to the destination, the output controller 2902 causes the robot 100 to output a response related to guidance of the route. In addition, the output controller 2902 causes the robot 100 to output a response related to guidance of a route in accordance with the detection information. Furthermore, the output controller 2902 causes the robot 100 to output a response related to route guidance according to the emotion of the user 10 based on the detection information.

Here, in a wide hospital such as a university hospital, the user 10 may get lost in the route for medical consultation, examination, and the like. Accordingly, the robot 100 recognizes whether the user 10 is lost from the expression or action of the user indicated by detection information, and can guide the lost user 10 to the destination. Furthermore, the robot 100 can adjust the degree of politeness of guidance and the speed of movement according to the age, disease state, emotion, and the like of the user 10, making it possible to politely guide the user 10 to the destination.

Furthermore, for example, the output controller 2902 causes the robot 100 to output a response related to the suggestion of a transaction target according to the state of the user 10. With this configuration, based on the detection information of the user 10 who is considering moving, for example, the robot 100 can recognize the background of the user 10, the reason for moving, the economic situation, the point the user is particular about the real estate, and the like, making it possible to introduce an appropriate property to the user 10. Furthermore, the robot 100 can recognize, for example, an emotion such as expectation, anxiety, or the like of the user 10 associated with the moving, and provide a service considerate of the emotion (for example, providing positive gestures and positive utterances in a case where the emotion is anxiety).

Furthermore, for example, the output controller 2902 causes the robot 100 to output a gesture corresponding to the state of the user 10. With this configuration, the robot 100 can make a reaction gesture according to the emotion of the user 10, for example, making it possible to provide a human-like customer service.

The detection information may be a voice, an expression, a motion, or the like of the user 10 detected by various sensors included in the robot 100, or may indicate a surrounding situation of the user 10.

Furthermore, the output controller 2902 may cause the robot 100 to output a response having content corresponding to the state of the user 10 as described above, or may cause the robot 100 to output a response to the user 10 at a timing corresponding to the state of the user 10.

FIG. 7 schematically illustrates an example of an operation flow performed by the output unit 290. In step S200, the output unit 290 determines whether the user 10 to which the robot 100 outputs a response has been detected (step S200). When the user 10 has not been detected (step S200; No), the output unit 290 waits until the user 10 is detected.

In contrast, in a case where the user 10 has been detected (step S200; Yes), the output unit 290 recognizes the state of the user 10 based on the detection information detected from the user 10 (step S201). Subsequently, the output unit 290 causes the robot 100 to output a response to the user 10 according to the state of the user 10 (step S202), and ends the processing.

The robot 100 is an example of an electronic device including an action control system. The application target of the action control system is not limited to the robot 100, and the action control system can be applied to various electronic devices. Furthermore, the function of the server 300 may be implemented by one or more computers. At least a part of the functions of the server 300 may be implemented by a virtual machine. In addition, at least a part of the functions of the server 300 may be implemented in a cloud.

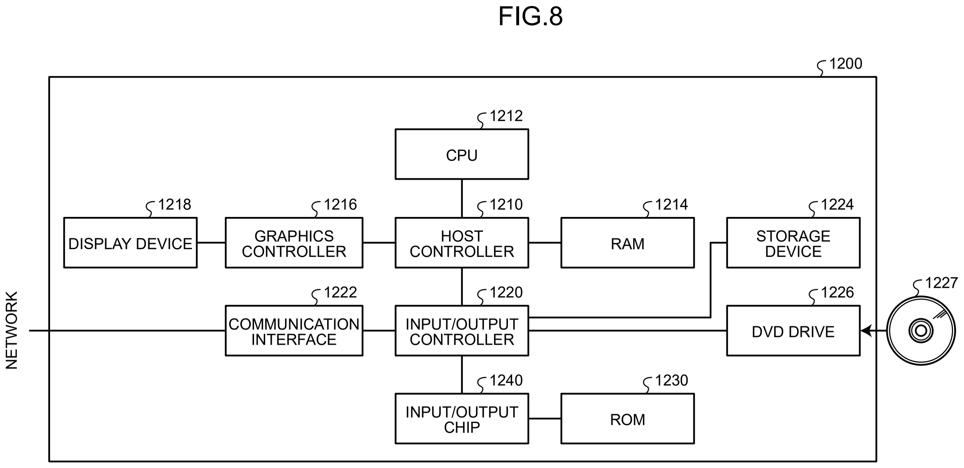

FIG. 8 is a diagram schematically illustrating an example of a hardware configuration of a computer 1200 functioning as the robot 100 and the server 300. A program installed in the computer 1200 can cause the computer 1200 to function as one or more "units" of the apparatus according to the present embodiment, or cause the computer 1200 to execute an operation associated with the apparatus according to the present embodiment or to implement the one or more "units", and/or cause the computer 1200 to execute a process according to the present embodiment or a stage of the process. Such a program may be executed by a CPU 1212 to cause the computer 1200 to perform certain operations associated with some or all of the blocks in the flowcharts and block diagrams described in the present specification.

The computer 1200 according to the present embodiment includes a CPU 1212, RAM 1214, and a graphics controller 1216, which are interconnected by a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a legacy input/output unit such as ROM 1230 and a keyboard, which are connected to the input/output controller 1220 via an input/output chip 1240.

The CPU 1212 operates in accordance with programs stored in the ROM 1230 and the RAM 1214, thereby controlling each unit. The graphics controller 1216 obtains image data generated by the CPU 1212 in a frame buffer or the like provided in the RAM 1214 or directly in the RAM 1214, and causes the image data to be displayed on a display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the read program or data to the storage device 1224. The IC card drive reads programs and data from an IC card and/or writes programs and data to the IC card.

The ROM 1230 stores therein a boot program and the like executed by the computer 1200 at the time of activation, and/or a program dependent on hardware of the computer 1200. The input/output chip 1240 may connect various input/output units to the input/output controller 1220 via a USB port, a parallel port, a serial port, a keyboard port, a mouse port, or the like.

The program is provided by a computer-readable storage medium such as a DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 so as to provide a linkage between the programs and various types of hardware resources described above. The apparatus or method may be configured by implementing operation or processing of information in accordance with use of the computer 1200.

For example, when communication is performed between the computer 1200 and an external device, the CPU 1212 may execute a communication program loaded in the RAM 1214 and instruct the communication interface 1222 to perform communication processing based on processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network into a reception buffer area or the like provided on the recording medium.

In addition, the CPU 1212 may allow the RAM 1214 to read all or a necessary portion of a file or database stored in an external recording medium such as the storage device 1224, a DVD drive 1226 (DVD-ROM 1227), or the IC card, and may execute various types of processing on data on the RAM 1214. Next, the CPU 1212 may perform write-back of the processed data to the external recording medium.

Various types of information, such as various types of programs, data, tables, and databases, may be stored in a recording medium and subjected to information processing. The CPU 1212 may execute various types of processing on data read from the RAM 1214, including various types of operations, information processing, condition determination, conditional branching, unconditional branching, information search/replacement, and the like, which are described throughout the present disclosure and designated by a command sequence of a program, and writes back the results of processing to the RAM 1214. In addition, the CPU 1212 may search for information in a file, a database, or the like in the recording medium. For example, when a plurality of entries, each having an attribute value of a first attribute associated with an attribute value of a second attribute, is stored in the recording medium, the CPU 1212 may search for an entry in which the attribute value of the first attribute matches a designated condition from the plurality of entries, read the attribute value of the second attribute stored in the entry, and thereby acquire the attribute value of the second attribute associated with the first attribute satisfying the predetermined condition.

The above-described program or software modules may be stored in a computer-readable storage medium on the computer 1200 or in the vicinity of the computer 1200. Furthermore, a recording medium such as a hard disk or RAM provided in a server system connected to a dedicated communication network or the Internet can be used as a computer-readable storage medium, thereby providing the program to the computer 1200 via the network.

The blocks in the flowcharts and block diagrams in the present embodiment may represent stages of a process in which an operation is performed or "units" of an apparatus that are responsible for performing the operation. Specific stages and "units" may be implemented by dedicated circuits, programmable circuits provided together with computer-readable instructions stored on a computer-readable storage medium, and/or by a processor provided together with computer-readable instructions stored on a computer-readable storage medium. Dedicated circuits may include digital and/or analog hardware circuits, and may include integrated circuits (ICs) and/or discrete circuits. Programmable circuits may include reconfigurable hardware circuits including, for example, logical conjunction, logical disjunction, exclusive OR, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, and as a result, the computer-readable storage medium including instructions stored in the device is to have a product including instructions that can be executed to create means for executing operations designated in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), a digital versatile disk (DVD), a Blu-ray (registered trademark) disk, a memory stick, and an integrated circuit card.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk, JAVA (registered trademark), and C++, and conventional procedural programming languages, such as the "C" programming language or similar programming languages.

The computer-readable instructions may be provided for a processor or programmable circuits of a general purpose computer, special purpose computer, or other programmable data processing apparatus, either locally or over a local area network (LAN), a wide area network (WAN) such as the Internet so as to cause the processor or programmable circuits of the general purpose computer, special purpose computer, or other programmable data processing apparatus to execute the computer-readable instructions in order to generate means to execute the operations designated in the flowcharts or block diagrams. Examples of the processor include a computer processor, a processing unit, a microprocessor, a digital signal processor, a controller, and a microcontroller.

### (Other embodiments)

The robot 100 described above may be mounted on a stuffed toy, or may be applied to a control device connected by a wireless or wired link to a control target device (speaker or camera) mounted on the stuffed toy.

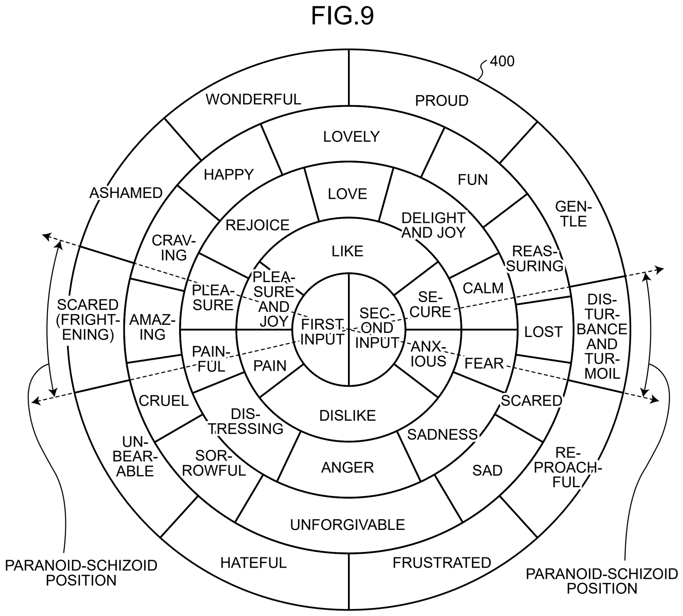

The emotion decision unit 232 may decide the user's emotion in accordance with a specific mapping. Specifically, the emotion decision unit 232 may decide the user's emotion based on an emotion map (refer to FIG. 9) being a specific mapping.

FIG. 9 is a diagram illustrating an emotion map 400 on which a plurality of emotions is mapped. On the emotion map 400, emotions are mapped concentrically radially from the center. The closer to the center of the concentric circle, the more the emotion disposed is toward a primitive state. Emotions indicating states and actions generated from the state of mind are disposed toward the outer side of the concentric circle. The emotion is a concept including an affect and a mental state. The left side of the concentric circle generally includes emotions generated from reactions occurring in the brain. The right side of the concentric circle generally includes emotions induced by situational judgment. The upper and lower directions of the concentric circle generally include emotions generated from reactions occurring in the brain and induced by situational judgment. Furthermore, the upper side of the concentric circle includes "pleasant" emotions while the lower side of the concentric circle includes "unpleasant" emotions. In this manner, the emotion map 400 is a map on which a plurality of emotions is mapped based on a structure of generating emotions, and emotions that are likely to occur at the same time are mapped close to each other.
(1) For example, in a case where the emotion engine, which is the emotion decision unit 232 of the robot 100, detects an emotion at about 100 msec, the decision of the reaction operation (for example, affirmative interjection) of the robot 100 may be performed at a timing at which the frequency is at least similar to the detection frequency (100 msec) of the emotion engine, or may be performed at a timing earlier than this. The detection frequency of the emotion engine may be construed as a sampling rate.
   The emotion is detected in about 100 msec, and the reacting operation (for example, affirmative interjection) is immediately performed in conjunction with the detection, making it possible to achieve a dialogue reading the situation instead of giving a strange affirmative interjection. The robot 100 performs a reacting operation (affirmative interjection or the like) in accordance with the directionality and the degree (intensity) of the mandala-like chart of the emotion map 400. The detection frequency (sampling rate) of the emotion engine is not limited to 100 ms, and may be changed depending on the situation (such as when playing sports), the age of the user, or the like.
(2) With reference to the emotion map 400, the directionality and the degree of intensity of the emotion may be set in advance to set the motion of the affirmative interjection and the magnitude of the affirmative interjection. For example, in a case where the robot 100 feels a sense of stability, security, or the like, the robot 100 continues listening to the talk while nodding. When the robot 100 feels anxious, lost, or suspicious, the robot 100 may tilt its head or stop nodding.
   These emotions are distributed in the 3 o'clock direction of the emotion map 400, and usually wander between security and anxiety. In the right half of the emotion map 400, situational awareness is stronger than internal sensation, and thus gives a calm impression.
(3) When the robot 100 feels good after being complimented, a filler "Wow" may come before the words; when the robot feels heavy after receiving harsh words, a filler "Ohh!" may come before the words. Furthermore, a physical reaction such as a gesture of the robot 100 crouching while saying "Ohh!" may be included. These emotions are distributed around 9 o'clock on the emotion map 400.
(4) In the left half of the emotion map 400, internal sensation (reaction) is stronger than situational awareness. Therefore, an impression of unintentional reaction can be given.
   In a case where the robot 100 has a favorable feeling in situational awareness while having an internal feeling (reaction) of satisfaction, the robot 100 may nod deeply while looking at the other party, or may utter "Yeah". In this manner, the robot 100 may generate a balanced favorable feeling to the other party, that is, an action such as tolerance or generosity to the other party. Such emotions are distributed around 12 o'clock on the emotion map 400.
   On the contrary, when the robot 100 has an internal feeling (reaction) of unpleasant feeling and also has negative feelings as situational awareness, the robot 100 may shake its head when feeling antipathy, and may stare at the other party with LED eyes turned into red when the robot 100 has a feeling close to hatred. Such emotions are distributed around 6 o'clock on the emotion map 400.
(5) Since the inner side of the emotion map 400 represents the inside of the mind and the outer side of the emotion map 400 represents an action, the emotion is more visible (appears in the action) toward the outer side of the emotion map 400.
(6) In a case where the robot 100 listens to a person's speech while feeling the sense of security distributed around 3 o'clock on the emotion map 400, the robot slightly nods with a sound "uh-huh". However, in the direction of love around 12 o'clock, the robot may perform strong and deep nodding.

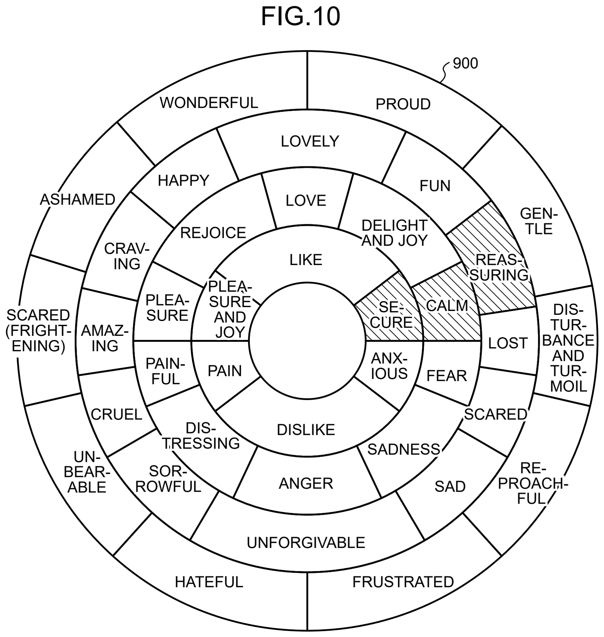

The emotion decision unit 232 inputs the information analyzed by the sensor module unit 210 and the recognized state of the user 10 to a neural network trained in advance, acquires an emotion value indicating each emotion illustrated on the emotion map 400, and decides the emotion of the user 10. This neural network is trained in advance based on a plurality of pieces of learning data including a combination of the information analyzed by the sensor module unit 210 and the recognized state of the user 10 and the emotion value indicating each emotion illustrated on the emotion map 400. Furthermore, as in an emotion map 900 illustrated in FIG. 10, this neural network is trained to allow emotions disposed close to each other to have close values. FIG. 10 is a diagram illustrating another example of the emotion map. FIG. 10 illustrates an example in which a plurality of emotions such as "secure", "calm", and "reassuring" have emotion values close to each other.

Furthermore, the emotion decision unit 232 may decide the emotion of the robot 100 in accordance with a specific mapping. Specifically, the emotion decision unit 232 inputs the information analyzed by the sensor module unit 210, the state of the user 10 recognized by the user state recognition unit 230, and the state of the robot 100 to a neural network trained in advance, acquires an emotion value indicating each emotion illustrated on the emotion map 400, and decides the emotion of the robot 100. This neural network is trained in advance based on a plurality of pieces of learning data including a combination of the information analyzed by the sensor module unit 210, the recognized state of the user 10, and the state of the robot 100, and the emotion value indicating each emotion illustrated on the emotion map 400. For example, the neural network is trained based on learning data indicating that the emotion value "3" of "happy" is obtained in a case where the robot 100 is recognized as being petted by the user 10 from the output of the touch sensor, and learning data indicating that the emotion value "3" of "angry" is obtained in a case where the robot 100 is recognized as being hit by the user 10 from the output of the acceleration sensor. Furthermore, as in an emotion map 900 illustrated in FIG. 10, this neural network is trained to allow emotions disposed close to each other to have close values.

Furthermore, the emotion decision unit 232 may decide the emotion of the robot 100 based on the action content of the robot 100 generated by the text generation model. Specifically, the emotion decision unit 232 inputs the action content of the robot 100 generated by the text generation model to the neural network trained in advance, acquires the emotion value indicating each emotion illustrated on the emotion map 400, integrates the acquired emotion value indicating each emotion and the emotion value indicating each emotion of the current robot 100, and updates the emotion of the robot 100. For example, the acquired emotion value indicating each emotion and the emotion value indicating each emotion of the current robot 100 are averaged and integrated. This neural network is trained in advance based on a plurality of pieces of learning data that is a combination of text representing the action content of the robot 100 generated by the text generation model and the emotion value indicating each emotion illustrated on the emotion map 400.

For example, there is a case where utterance content of the robot 100 "Good for you. Lucky you." is obtained as the action content of the robot 100 generated by the text generation model. In this case, the emotion of the robot 100 is updated such that, when the text representing the utterance content is input to the neural network, a high value is obtained as the emotion value of the emotion "happy" to increase the emotion value of the emotion "happy".

The action decision unit 236 adds a fixed sentence for asking a question about the action content of the robot corresponding to the user's action to the text representing the user's action, the user's emotion, and the robot's emotion, and inputs the obtained text to the text generation model having a dialogue function, thereby generating the action content of the robot.

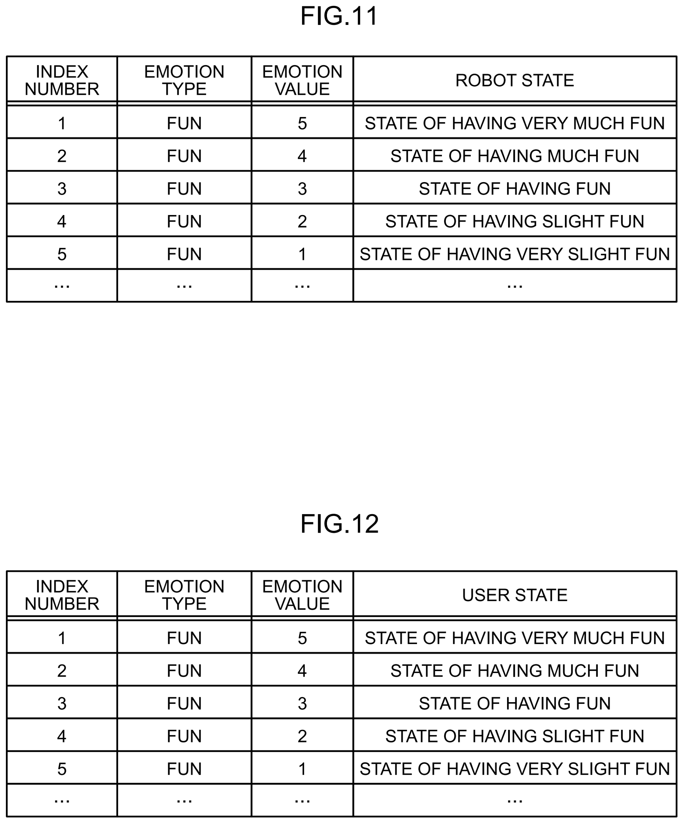

For example, the action decision unit 236 uses an emotion table as illustrated in FIG. 11 to acquire a text indicating the state of the robot 100 from the emotion of the robot 100 decided by the emotion decision unit 232. FIG. 11 is a diagram illustrating an example of the emotion table. Here, in the emotion table, an index number is assigned to each emotion value for each type of emotion, and a text indicating the state of the robot 100 is stored for each index number.

In a case where the emotion of the robot 100 decided by the emotion decision unit 232 corresponds to the index number "2", a text "state of having much fun" is obtained. Note that, in a case where the emotion of the robot 100 corresponds to a plurality of index numbers, a plurality of texts indicating the state of the robot 100 is obtained.

Furthermore, an emotion table as illustrated in FIG. 12 is prepared also for the emotion of the user 10. FIG. 12 is a diagram illustrating an example of the emotion table. Here, in a case where the user's action is to say "AAA.", the emotion of the robot 100 corresponds to the index number "2 ", and the emotion of the user 10 corresponds to the index number "3", the sentences "The robot is in a state of having much fun. The user is having fun. The user said "AAA" to the robot. What will be an answer as a robot?" is to be input to the text generation model and acquires the action content of the robot. THE USER IS HAVING FUN. The action decision unit 236 decides an action of the robot from the action content.

In this manner, since the robot 100 can change the action of the robot in accordance with the index number corresponding to the emotion of the robot, the user has an impression of the robot 100 having a heart, and is prompted to take an action such as talking to the robot.

Furthermore, the action decision unit 236 may generate the action content of the robot by adding not only the text indicating the action of the user, the emotion of the user, and the emotion of the robot but also the text indicating the content of the history data 222, and then adding a fixed sentence for asking a question about the action content of the robot corresponding to the action of the user and inputting the obtained text to the dialogue function. This makes it possible for the robot 100 to change the action of the robot according to the history data indicating the user's emotion and action, and this gives the user an impression of the robot having individuality, and prompts the user to take an action such as talking to the robot. Furthermore, the history data may further include the emotion and action of the robot.

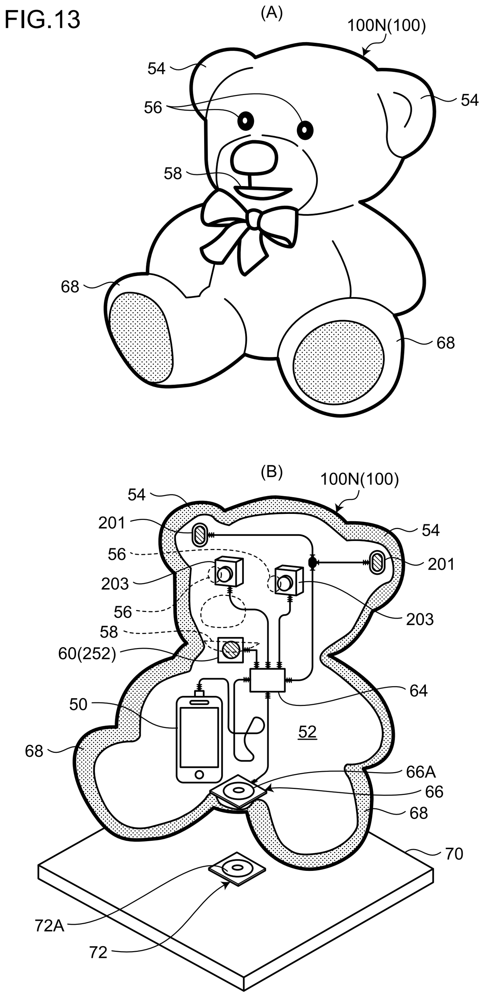

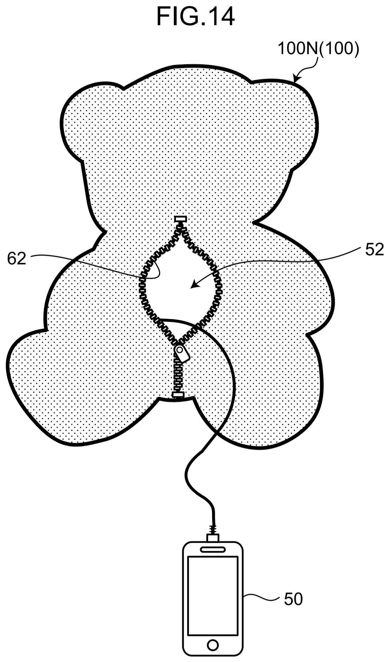

Specifically, the stuffed toy is configured as follows. For example, the robot 100 may be applied to a cohabitant (specifically, a stuffed toy 100N illustrated in FIGS. 13 and 14) who spends daily life with the user 10 and has a dialogue with the user 10 based on information related to daily life, and provides information matching the tastes and preferences of the user 10. In another embodiment, an example in which the control section of the robot 100 is applied to the smartphone 50 will be described.

The stuffed toy 100N is equipped with a function as an input/output device of the robot 100. The smartphone 50 functioning as a control section of the robot 100 is detachable from the robot 100. Inside the stuffed toy 100N, an input/output device and the smartphone 50 which is accommodated in the stuffed toy 100N are connected to each other.

As illustrated in FIG. 13(A), the stuffed toy 100N has a shape of a bear an external appearance of which is covered with a soft fabric in the another embodiment. As illustrated in FIG. 13(B), the input/output devices disposed in a space 52 formed inside the stuffed toy 100N include: a microphone 201 (refer to FIG. 2) of the sensor unit 200 disposed at a portion corresponding to each ear 54; a 2D camera 203 of the sensor unit 200 disposed at a portion corresponding to an eye 56 (refer to FIG. 2); and a speaker 60 constituting a part of the control target 252 (refer to FIG. 2) disposed at a portion corresponding to a mouth 58. Note that the microphone 201 and the speaker 60 are not necessarily separated from each other, and may be an integrated unit. In the case of the unit, it is preferable to dispose the unit at a position where the utterance can be heard naturally, such as the position of the nose of the stuffed toy 100N. Although the case where the stuffed toy 100N has an animal shape has been described as an example, the present invention is not limited thereto. The stuffed toy 100N may have a shape of a specific character.

The smartphone 50 has functions illustrated in FIG. 2, namely, a function as the sensor module unit 210, a function as the storing unit 220, a function as the user state recognition unit 230, a function as the emotion decision unit 232, a function as the action recognition unit 234, a function as the action decision unit 236, a function as the storage control unit 238, a function as the action control unit 250, and functions as the communication processing unit 280 and the output unit 290.

As illustrated in FIG. 14, a fastener 62 is attached to a part (for example, the back portion) of the stuffed toy 100N. By opening the fastener 62, the outside and the space 52 communicate with each other.

Here, the smartphone 50 is accommodated in the space 52 from the outside and is connected in USB connection to each input/output device via a USB hub 64 (refer to FIG. 13(B)), so as to have a function equivalent to that of the robot 100 illustrated in FIG. 1.

The USB hub 64 is connected to a non-contact power receiving plate 66. The power receiving plate 66 incorporates a power receiving coil 66A. The power receiving plate 66 is an example of a wireless power receiving unit that receives power supply wirelessly.

The power receiving plate 66 is disposed near a root 68 of both legs of the stuffed toy 100N, and is located closest to a mounting base 70 when the stuffed toy 100N is placed on the mounting base 70. The mounting base 70 is an example of an external wireless power transmitter.

The stuffed toy 100N placed on the mounting base 70 can be viewed as a statuette in a natural state.

In addition, this root is formed to be thinner than the surface layer thickness of the stuffed toy 100N in other parts, and thus is held in a state closer to the mounting base 70.

The mounting base 70 includes a charging pad 72. The charging pad 72 incorporates a power transmitting coil 72A. When the power transmitting coil 72A transmits a signal to search the power receiving coil 66A of the power receiving plate 66, and when the power receiving coil 66A is found, a current flows through the power transmitting coil 72A to generate a magnetic field, and the power receiving coil 66A reacts to the magnetic field to start electromagnetic induction. This allows current to flow through the power receiving coil 66A, and power is stored in a battery (not illustrated) of the smartphone 50 via the USB hub 64.

That is, the smartphone 50 is automatically charged by placing the stuffed toy 100N as a statuette on the mounting base 70, making it unnecessary to take out the smartphone 50 from the space 52 of the stuffed toy 100N for charging.

In the another embodiment, the smartphone 50 is accommodated in the space 52 of the stuffed toy 100N and connected by wired connection (USB connection), but the connection is not limited thereto. For example, a control device having a wireless function (for example, "Bluetooth (registered trademark)") may be accommodated in the space 52 of the stuffed toy 100N, and the control device may be connected to the USB hub 64. In this case, the smartphone 50 and the control device wirelessly communicate with each other without inserting the smartphone 50 into the space 52, and the external smartphone 50 is connected to each input/output device via the control device, making it possible to have a function equivalent to that of the robot 100 illustrated in FIG. 1. Alternatively, the control device accommodated in the space 52 of the stuffed toy 100N and the external smartphone 50 may be connected to each other by wired connection.

While the another embodiment has exemplified a the stuffed toy 100N as a toy bear, the stuffed toy 100N may be another stuffed animal, a doll, or may have a shape of a specific character. In addition, their clothes may be changeable. The material of the skin is not limited to a fabric, and may be other materials such as soft vinyl, but is preferably to be a soft material.

Furthermore, a monitor may be attached to the skin of the stuffed toy 100N to add the control target 252 that provides information to the user 10 through vision. For example, the eye 56 may be used as a monitor to express delight, anger, sadness, and joy by an image projected on the eye 56, or there may be provided, at a belly, a window through which the monitor of the built-in smartphone 50 is visible. Furthermore, the eyes 56 may be used as a projector to express delight, anger, sadness, and joy by an image projected on a wall surface.

According to the another embodiment, the existing smartphone 50 is placed in the stuffed toy 100N, and the 2D camera 203, the microphone 201, the speaker 60, and the like are extended from the smartphone 50 to appropriate positions via the USB connection.

Furthermore, for wireless charging, the smartphone 50 and the power receiving plate 66 are connected via USB, and the power receiving plate 66 is disposed so as to be as outermost as possible from the inside of the stuffed toy 100N.

In order to use the wireless charging of the smartphone 50, it is necessary to dispose the smartphone 50 as outermost as possible when viewed from the inside of the stuffed toy 100N, which would give a rough feeling when the stuffed toy 100N is touched from the outside.

To avoid this, the smartphone 50 is disposed at the center of the stuffed toy 100N as much as possible, while the wireless charging function (power receiving plate 66) is disposed as outermost as possible as viewed from the inside of the stuffed toy 100N. The 2D camera 203, the microphone 201, the speaker 60, and the smartphone 50 receive wireless power supply via the power receiving plate 66.

### (Second embodiment)

Each robot can also have an event detecting function of detecting occurrence of a predetermined event and outputting information corresponding to the event that has occurred. For example, each robot detects an event in which the user needs a support. In a second embodiment, such an event includes an event in which the user viewing artwork needs a support, an event in which the user playing a game needs a support, and an event in which a traveler needs a support at a location of traveling.

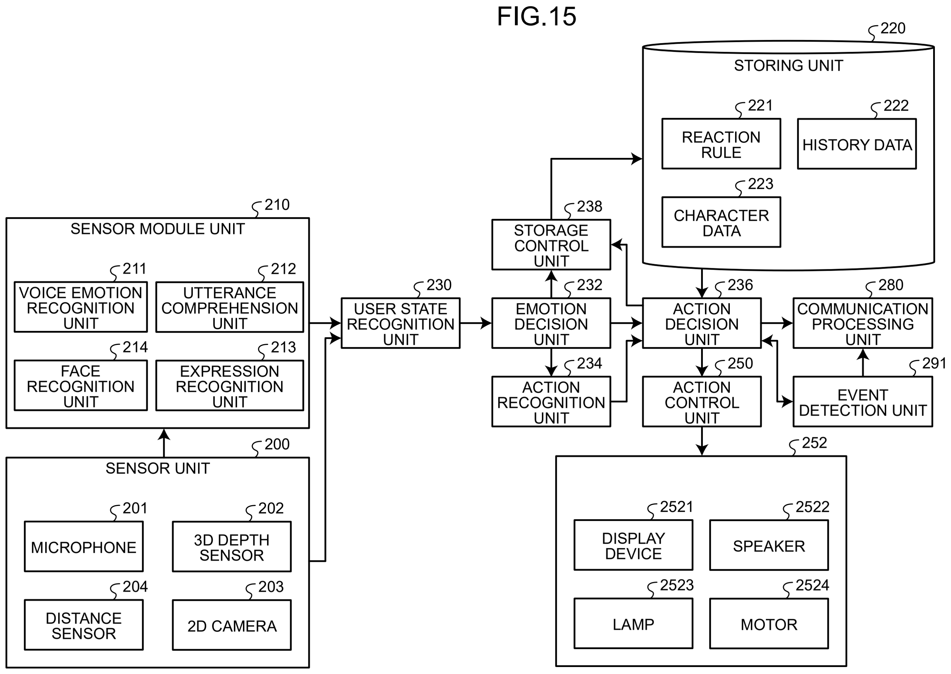

Hereinafter, a system 5 according to the second embodiment will be described with reference to FIG. 15. The description of the same configuration and the like as those of the above-described embodiment will be omitted. FIG. 15 schematically illustrates a functional configuration of a robot 100 according to the second embodiment. The robot 100 according to the second embodiment includes an event detection unit 291 instead of the output unit 290.

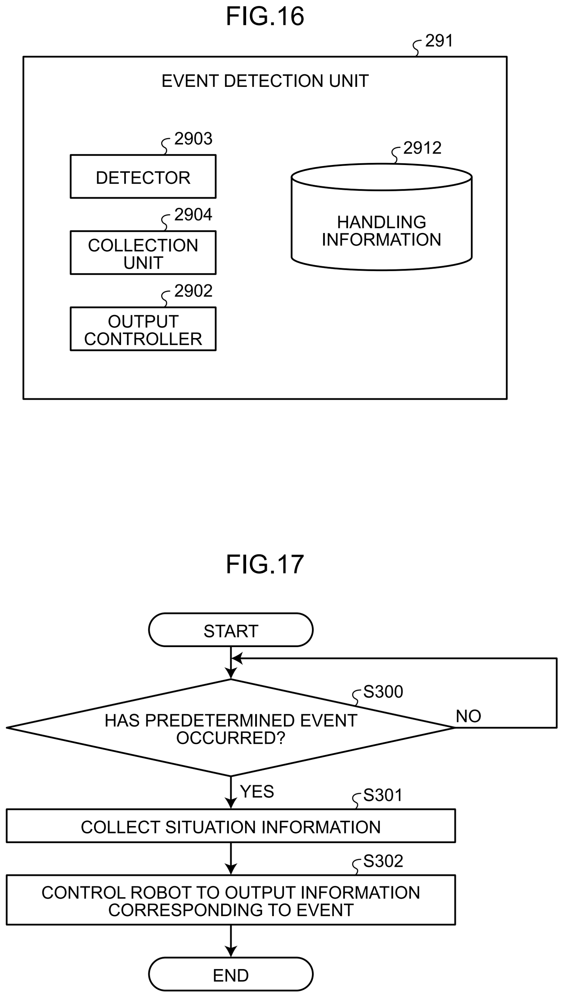

The event detection unit 291 implements the event detecting function described above. Hereinafter, the event detection unit 291 will be described in detail with reference to FIG. 16. Here, the event detection unit 291 is provided in the robot 100 and causes the robot 100 to output information corresponding to the detected event.

As illustrated in FIG. 16, the event detection unit 291 includes a detector 2903, a collection unit 2904, and an output controller 2902. The event detection unit 291 also stores handling information 2912.

Each component of the event detection unit 291 is implemented by the CPU operating based on a program. For example, the functions of these components can be implemented as the operation of the CPU by basic software (OS) and a program operating on the OS. The handling information 2912 is implemented by a storage medium such as memory.

The detector 2903 detects occurrence of a predetermined event. The detector 2903 detects a user viewing artwork in a cultural facility such as a museum or a gallery. In addition, the detector 2903 detects a user playing a game using various game devices or various board games. In addition, the detector 2903 detects an event in which an international traveler talks to the robot 100. The output controller 2902 controls the robot 100 including the text generation model to output, to the user 10, information corresponding to the event detected by the detector 2903.

In addition, the collection unit 2904 collects situation information indicating a situation of the user 10. Subsequently, the output controller 2902 controls the robot 100 to output information according to the situation information. For example, the collection unit 2904 collects information indicating artwork being currently viewed by the user 10 who views the artwork and a situation of the user 10 (voice of user 10, image of user 10, and the like). Furthermore, in a case of an event spoken to by the user 10 who is an international traveler, the collection unit 2904 collects information indicating a situation of the user 10 (voice of user 10, image of user 10, and the like). This allows the robot 100 to recognize the emotion of the user 10 from the voice, the image, and the like of the user 10.

The output controller 2902 controls the robot 100 to perform an action corresponding to the situation information collected by the collection unit 2904. For example, the output controller 2902 reads an interest and an impression during viewing of artwork from the emotion of the user 10 who is viewing artwork, and controls the robot 100 to perform explanation about this and suggestion of a related work according to the interest and the impression. More specifically, the output controller 2902 controls the utterance content of the robot 100 so as to explain the content according to the interest of the user 10 with respect to the artwork in which the user 10 is interested or to suggest a related work or the like estimated to be possessed by the user 10. That is, in this case, the output controller 2902 controls the robot 100 so that the robot 100 behaves as a curator personalized to the user 10.

Furthermore, the output controller 2902 controls the robot 100 to give advice to the user 10 in accordance with the emotion of the user 10 who is executing the game or the game situation, for example. For example, the output controller 2902 controls the utterance content of the robot 100 so as to perform appropriate game play and advice according to the emotion of the user 10. That is, in this case, the output controller 2902 controls the robot 100 so as to allow the user 10 to enjoy the game together with the robot 100.

Furthermore, for example, the output controller 2902 controls the robot 100 to support language translation and the like to an international traveler who is traveling abroad while following the emotion of the international traveler. For example, the output controller 2902 controls the utterance content and the like of the robot 100 so as to eliminate concerns and problems in the traveler. As a more specific example, the output controller 2902 controls the robot 100 to listen to the international traveler about their concerns and problems and allow the robot 100 to make utterances regarding solutions to the concerns and problems, in the language of the international traveler. Furthermore, as another example, the output controller 2902 controls the robot 100 to support the international traveler by translating each conversation across the international traveler and the local person.

FIG. 17 schematically illustrates an example of an operation flow performed by the event detection unit 291. In step S300, the event detection unit 291 determines whether occurrence of a predetermined event has been detected (step S300). In a case where the occurrence of the predetermined event has not been detected (step S300; No), the event detection unit 291 waits until the occurrence of a predetermined event is detected.

On the other hand, in a case where the occurrence of the predetermined event has been detected (step S300; Yes), the event detection unit 291 collects situation information indicating the situation of the user 10 (step S301). Subsequently, the event detection unit 291 controls the robot 100 provided with the text generation model to output an action corresponding to the situation information to the user 10 (step S302), and ends the processing.

### (Third embodiment)

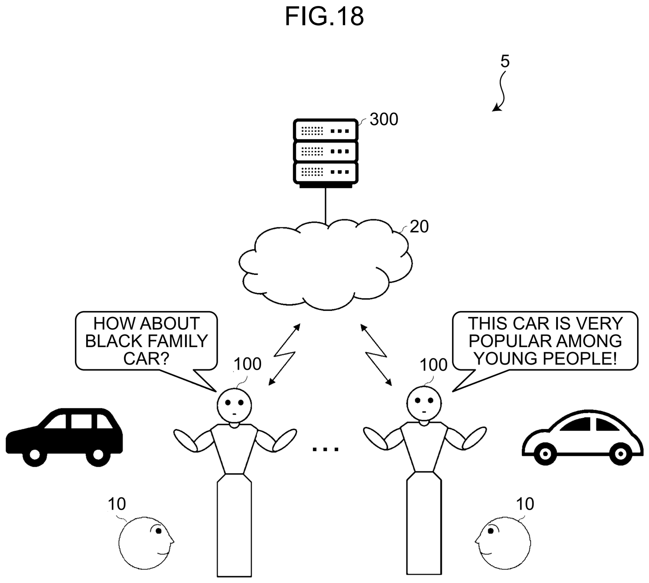

Next, a system 5 according to a third embodiment will be described with reference to FIG. 18. The description of the same configuration and the like as those of the above-described embodiment will be omitted. FIG. 18 schematically illustrates an example of an overall configuration of the system 5 according to the third embodiment. Note that the server 300 can function as an information processing system. The system 5 may be an example of an information processing system. The information processing system is an example of an action control system.

The robot 100 is disposed in an automobile dealer, for example. The robot 100 is disposed in a housing exhibition hall, for example. The robot 100 is disposed in an electric appliance store, for example. The robot 100 is disposed in any other store. FIG. 18 illustrates an example in which the robot 100 is disposed in an automobile dealer.

The server 300 is provided remotely from the robot 100. The server 300 can control the robot 100 through a communication network 20. The communication network 20 is an example of a network for communication. For example, the server 300 acquires sensor information detected by the robot 100 through the communication network 20, decides an operation to be performed by the robot 100 based on the acquired sensor information, and transmits control information through the communication network 20 to instruct the robot 100.

For example, the robot 100 acquires various types of information detected by the sensor, such as a voice and an image of the user 10 and information on an external force received by the robot 100, and transmits the acquired information to the server 300. Based on the information acquired from the robot 100, the server 300 generates control information for controlling the robot 100.

In the system 5, the server 300 may execute processing of various types of information to determine an action of the robot 100, and processing of deciding an action of the robot 100 based on a result of processing of various types of information. Some or all of these procedures of processing may be executed by the robot 100. In this case, a part of the robot 100 functions as an information processing system.

The system 5 according to the third embodiment executes processing of conducting sales activities for the user 10 using the robot 100. The robot 100 may be a humanoid robot. The robot 100 may be a robot other than a humanoid. The robot 100 may be an example of an electronic device. The user 10 is a user who uses the robot 100. The user 10 may be an example of a customer.

The server 300 has, for example, a function of selecting a sales talk to the user 10 by the robot 100. For example, the server 300 stores in advance a talk step including a plurality of talk scripts in which the talk content of the sales talk to the user 10 by the robot 100 is prescribed. The server 300 selects one talk step from the plurality of talk steps stored in advance, and causes the robot 100 to talk with the user 10 at the one talk step.

The talk step is classified for each talk theme, for example. The talk theme includes "greeting", for example. The talk theme includes "small talk". The talk theme includes "collecting information". The talk theme includes "suggesting item", for example. The talk theme includes "explaining suggested item", for example. The talk theme includes "Question & Answer", for example. The talk theme includes "confirming purchase of item", for example. The talk theme includes "explaining payment procedures", for example. The talk theme includes, for example, "customer send-off". The talk themes may include any other themes.

For example, the talk step having a talk theme classified as "greeting" includes a plurality of talk scripts such as "Good morning.", "Hello.", and "Thank you for coming all the way on a rainy day.". For example, the talk step having a talk theme classified as "small talk" includes a plurality of talk scripts such as "It is hot again today!", "The Japan National soccer team's game yesterday was exciting!", and the like.

For example, the talk step having a talk theme classified as "collecting information" includes a plurality of talk scripts of collecting information for directly specifying the vehicle desired to be purchased by the user 10, such as "What color do you like for your car?", "What type of vehicle do you like?", and "Which do you like, a hybrid car or an electric car?". For example, the talk step having a talk theme classified as "collecting information" includes a plurality of talk scripts of collecting information for indirectly specifying the vehicle desired to be purchased by the user 10, such as "Do you have any children?", "Are you interested in outdoor activities?", and "Do you camp on holidays?".

For example, the talk step having a talk theme classified as "Suggesting item" includes a plurality of talk scripts such as "This car A is recommended for customers who like black!", "For a family with two small children, this family car B is undoubtedly for you!", "How about an SUV car C currently in a hot topic in a TV commercial with Mr. (Miss) ∇∇?", and "I think that electric vehicle D, which is very popular among young people, is suitable for customers considering purchasing an electric vehicle!".

For example, the talk step having a talk theme classified as "explaining suggested item" includes a plurality of talk scripts for explaining good points of the suggested item, such as "The strength of the car A is its capability of tight turns and a large luggage space.", and "The family car B has sliding doors, providing easier access for children". For example, the talk step having a talk theme classified as "explaining suggested item" includes a plurality of talk scripts for explaining drawbacks of the suggested item, such as "The shortcoming of the car A is slightly lower fuel efficiency compared with other cars with the same size.", and "The price of the family car B is slightly over your budget.".

For example, the talk step having a talk theme classified as "Question & Answer" includes a plurality of talk scripts in which the robot 100 answers questions from the user 10, such as "The price of the car A is ××× yen.", "The fuel consumption of the family car B is △△km/L.", "The SUV car C has color variations of white, black, and silver.", and "The driving range of the electric vehicle D is □□km." For example, the talk step having a talk theme classified as "Question & Answer" includes a plurality of talk scripts to be spoken by the robot 100 to the user 10, such as "A car navigation system is available as an option, what would you like?", "Was there anything you didn't care for in the suggested car?", "Are you looking for a more fuel efficient car?", and "10% discount is available now, how do you like it?".

For example, the talk step having a talk theme classified as "confirming purchase of item" includes a plurality of talk scripts such as "Is it all right that you purchase the car A?", "Thanks for purchasing family car B!", and "We understand that you will pass on the purchase of the SUV car C this time.". For example, the talk step having a talk theme classified as "Explaining payment procedures" includes a plurality of talk scripts such as "Electronic money, credit card, and cash are available for payment.", and "Please wait for a while as the salesclerk will handle this separately". For example, in the talk theme when a talk step is classified as "customer send-off" includes, for example, a plurality of talk scripts such as "We look forward to your next visit.", and "Thank you for visiting us today".

The server 300 has, for example, a function of deciding an emotion value indicating the emotion of the user 10. For example, the server 300 decides the emotion value of the user 10 while the robot 100 is talking with the user 10 based on one talk step selected by the server 300.

The emotion value of the user 10 may include the type of the emotion of the user 10 and a value indicating whether the emotion of the user 10 is positive/negative. Types of emotions of the user 10 include "delighted", "joyful", "pleasant", "secure", "excited", "relieved", "fulfilled", "angry", "sad", "unpleasant", "anxious", "sorrowful", "worried", and "empty". These are examples, and the type is not limited thereto. The emotion value indicating the positive/negative of the emotion of the user 10 is a value that indicates a positive value when the emotion of the user is a positive emotion accompanied with pleasure or comfort, such as "delighted", "joyful", "pleasant", "secure", "excited", "relieved", and "fulfilled", and the emotion value becomes a larger value as the emotion is more positive. When the emotion of the user 10 is an emotion having a negative emotion, such as "angry", "sad", "unpleasant", "anxious", "sorrowful", "worried", and "empty", the value indicates a negative value, and the absolute value of the negative value is larger as the feeling is more negative. In a case where the emotion of the user 10 is not any of the above ("neutral"), the value indicating positive/negative indicates a value 0.

For example, based on an emotion value of the user 10 while the robot 100 is talking with the user 10 based on one talk step selected by the server 300, the server 300 selects a talk step next to the one talk step. For example, the server 300 selects the next talk step so as to increase the customer satisfaction level achieved by the sales activity by the robot 100.

For example, the server 300 selects one talk step from among a plurality of talk steps based on a story of the sales talk to the user 10 by the robot 100. Here, the following will describe an example in which the server 300 selects one talk step from a plurality of talk steps when the sales talk is a story formed in the order of "greeting", "collecting information", "suggesting item", "explaining suggested item", "confirming purchase of item", and "customer send-off".

For example, the server 300 selects a first talk step from a plurality of talk steps having a talk theme classified as "Greeting". The server 300 selects the first talk step based on the emotion value of the user 10 before the robot 100 starts talking with the user 10, for example.

Next, the server 300 selects the second talk step from a plurality of talk steps having a talk theme classified as "Collecting information". For example, the server 300 selects the second talk step based on the emotion value of the user 10 while the robot 100 is talking with the user 10 based on the first talk step having a talk theme classified as "Greeting".

Next, the server 300 selects a third talk step from a plurality of talk steps having a talk theme classified as "suggesting item". For example, the server 300 selects the third talk step based on the emotion value of the user 10 while the robot 100 is talking with the user 10 based on the second talk step having a talk theme classified as "Collecting information".

Next, the server 300 selects a fourth talk step from a plurality of talk steps having a talk theme classified as "Explaining suggested item". For example, the server 300 selects the fourth talk step based on the emotion value of the user 10 while the robot 100 is talking with the user 10 based on the third talk step having a talk theme classified as "suggesting item".

Next, the server 300 selects a fifth talk step from a plurality of talk steps having a talk theme classified as "confirming purchase of item". For example, the server 300 selects the fifth talk step based on the emotion value of the user 10 while the robot 100 is talking with the user 10 based on the fourth talk step having a talk theme classified as "Explaining suggested item".

Finally, the server 300 selects the last talk step from a plurality of talk steps having a talk theme classified as "Customer send-off". For example, the server 300 selects the last talk step based on the emotion value of the user 10 while the robot 100 is talking with the user 10 based on the fifth talk step having a talk theme classified as "confirming purchase of item".

The server 300 may interrupt the story of the sales talk by the robot 100 to the user 10 based on the emotion value of the user 10 while the robot 100 is talking with the user 10. For example, in a case where the sales talk is a story formed in the order of "suggesting item", "explaining suggested item", and "confirming purchase of item", there might be a case where the emotion value of the user 10 while the robot 100 is talking with the user 10 based on one talk step having a talk theme classified as "explaining suggested item" indicates that the emotion of the user 10 is a negative emotion. In this case, the server 300 may select the next step of the one talk step from among a plurality of talk steps having a talk theme classified as "Question & Answer", not from a plurality of talk steps having a talk theme classified as "confirming purchase of item". Thereafter, when the emotion value of the user 10 during the talk of the robot 100 with the user 10 based on one talk step having a talk theme classified as "Question & Answer" indicates that the emotion of the user 10 is a positive emotion, the server 300 may select the next step of the one talk step from among a plurality of talk steps having a talk theme classified as "confirming purchase of item". With this step, the story of the sales talk to the user 10 by the robot 100 may be resumed.

With the system 5 according to the third embodiment, a talk step next to one talk step is selected based on the one talk step in consideration of the emotion of the user 10 while the robot 100 is talking with the user 10, and the robot 100 is caused to talk with the user 10 using the selected next talk step. With this configuration, in the system 5 according to the third embodiment, the robot 100 can provide the user 10 with the sales talk with a high customer satisfaction level, such as the sales talk of the sales person with top business performance.

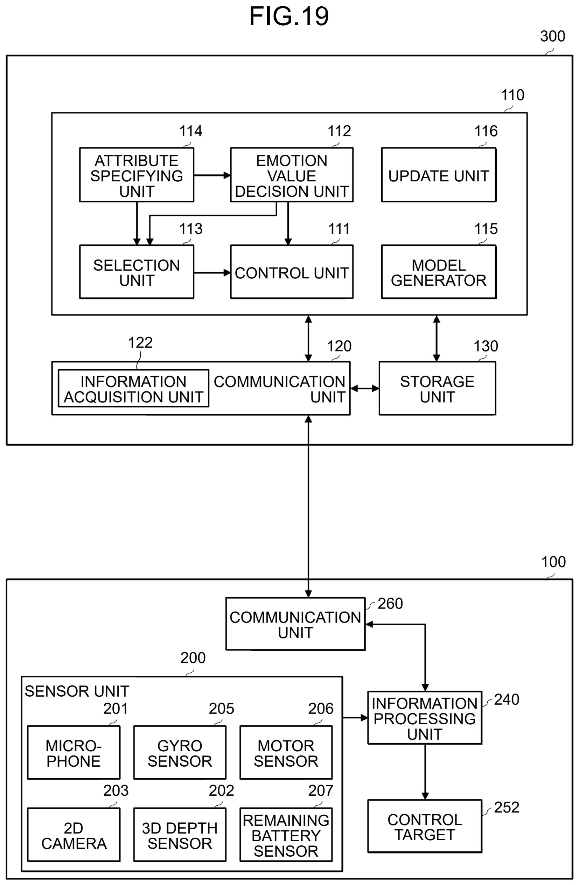

FIG. 19 schematically illustrates functional block configurations of the robot 100 and the server 300 according to the third embodiment. First, a functional block configuration of the robot 100 will be described. The robot 100 includes a sensor unit 200, an information processing unit 240, a control target 252, and a communication unit 260. The information processing unit 240 may be a processor such as an MPU. The communication unit 260 is responsible for communication with the server 300. The communication unit 260 may be a communication device such as a network IF.

The sensor unit 200 includes various sensors such as a gyro sensor 205, a motor sensor 206, and a remaining battery sensor 207 instead of the distance sensor 204. The sensor unit 200 is not necessarily required to include all of these, and the sensor unit 200 may include other sensors.

The gyro sensor 205 detects the angular velocity of the entire robot 100 and each unit of the robot 100. The motor sensor 206 detects a rotation angle of a drive shaft of a motor that drives a movable portion of the robot 100. The remaining battery sensor 207 detects the remaining capacity of the battery included in the robot 100.

The sensor unit 200 outputs various types of sensor information such as voice data acquired by the microphone 201, object information detected by the 3D depth sensor 202, the image captured by the 2D camera 203, the angular velocity detected by the gyro sensor 205, the rotation angle detected by the motor sensor 206, and the remaining capacity detected by the remaining battery sensor 207 to the information processing unit 240. The information processing unit 240 supplies the acquired sensor information to the communication unit 260 to transmit the sensor information to the server 300. Furthermore, based on the control information acquired from the server 300, the information processing unit 240 causes the speaker of the robot 100 to perform utterance, causes an LED of the robot 100 to emit light, or causes limbs or the like of the robot 100 to operate.

Next, a functional block configuration of the server 300 will be described. The server 300 includes an information processing unit 110, a communication unit 120, and a storage unit 130. The information processing unit 110 includes a control unit 111, an emotion value decision unit 112, a selection unit 113, an attribute specifying unit 114, a model generator 115, and an update unit 116. The information processing unit 110 is not necessarily required to include all of these.

The communication unit 120 is responsible for communication with various devices. The communication unit 120 is responsible for communication with the robot 100, for example. The communication unit 120 may be responsible for communication with an external device other than the robot 100. The communication unit 120 may be a communication device such as a network IF.

An information acquisition unit 122 acquires various types of information. The information acquisition unit 122 acquires sensor information detected by the sensor unit 200 of the robot 100, for example.

The information acquisition unit 122 acquires, for example, customer-related information related to a customer. The customer-related information includes image data of a customer, for example. The customer-related information includes voice data of a customer, for example. The customer-related information may include any other data related to a customer.

The information acquisition unit 122 acquires, for example, research results of marketing research related to an item to be sold by the robot 100 to a customer. The research result is, for example, statistical information disclosed on the Internet. More specifically, the research result is information such as "Male in his 40s has a purchase intention of ○○% for X company's car Y".

The information acquisition unit 122 acquires, for example, item-related information related to each item sold by the robot 100 to the customer. The item-related information includes a price of each item, for example. The item-related information includes the strength of each item, for example. The item-related information includes shortcoming of each item, for example. The item-related information includes, for example, target market information indicating a target market of each item to be sold by the robot 100 to the customer. The target market may be a "woman in twenties", a "family", a "camping lover", an "outdoor person", or the like. The item-related information may include any other information related to each item.

The storage unit 130 includes a storage medium such as a hard disk device or flash memory. The storage unit 130 also includes a volatile storage device such as RAM. The storage unit 130 stores information and the like needed for execution of processing of the information processing unit 110 in addition to a program code and various temporary data read by the information processing unit 110 at the time of execution. The storage unit 130 may store a model typically referred to as a Large Language Model (LLM). The storage unit 130 stores information acquired by the information acquisition unit 122 from various devices.

The control unit 111 decides an action of the robot 100 using the information stored in the storage unit 130 and the information acquired by the information acquisition unit 122, and transmits control information for executing the decided action to the robot 100 via the communication unit 120.

The storage unit 130 stores a plurality of talk steps, for example. The storage unit 130 stores a plurality of talk steps classified for each talk theme, for example.

The storage unit 130 stores, for example, story information indicating a story of the sales talk having a specified order of the talk themes used by the robot 100 when talking with the customer. The storage unit 130 stores the story information for each sales talk, for example.

The story of the sales talk is constructed, for example, to increase the customer satisfaction level achieved by the sales activity by the robot 100. The story of the sales talk is constructed, for example, to increase the emotion value of the customer. The story of the sales talk is constructed, for example, to set the emotion value of the customer to be constantly positive.

The storage unit 130 stores, for example, an output mode of outputting one talk script included in the talk step by the robot 100. The output mode may include the content of the display output. The output mode may include content of voice output. The output mode may include a tone of the voice of the robot 100. The output mode may include an utterance speed of the robot 100. The output mode may include information of an amount of pausing of the robot 100. The output mode may include the content of the body motion of the robot 100. The output mode may include information of gesture of the robot 100. The output mode may include information of the degree of nodding performed with the customer service target of the robot 100.

The emotion value decision unit 112 decides an emotion value of a customer. The emotion value decision unit 112 decides, for example, an emotion value of a customer before the robot 100 starts talking with the customer. The emotion value decision unit 112 decides the emotion value of the customer while the robot 100 is talking with the customer based on one talk step among a plurality of talk steps stored in the storage unit 130, for example.

The emotion value decision unit 112 recognizes a customer's emotion based on the information acquired by the information acquisition unit 122. The emotion value decision unit 112 recognizes a customer's emotion based on, for example, a customer's expression recognized by analyzing image data captured by the 2D camera 203. The emotion value decision unit 112 recognizes the emotion of the customer by analyzing the voice data of the customer detected by the microphone 201, for example. In this case, the emotion value decision unit 112 extracts a feature such as a frequency component of a voice, for example, and recognizes the emotion of the customer service target based on the extracted feature. The emotion value decision unit 112 may decide a customer's emotion value based on the recognized customer's emotion.

The information acquisition unit 122 acquires, for example, response information indicating a response of the customer to a question from the robot 100 to the customer while the robot 100 is talking with the customer based on one talk step among a plurality of talk steps stored in the storage unit 130. The response information may be included in the customer-related information.

The response of the customer includes, for example, making a correct answer to the question posed by the robot 100. The response of the customer includes, for example, making an off-topic answer to a question posed by the robot 100. The response of the customer includes, for example, echoing back to a question posed by the robot 100. The response of the customer includes, for example, nodding in response to a question posed by the robot 100. The response of the customer includes, for example, tilting the head in response to the question posed by the robot 100. The response of the customer includes, for example, asking a question in response to the question posed by the robot 100. The response of the customer may include any other response to the question posed by the robot 100.

The emotion value decision unit 112 may decide the emotion value of the customer based on the response information of the customer acquired by the information acquisition unit 122. For example, in a case where the customer's response indicated by the customer's response information includes making a correct answer to the question posed by the robot 100, and making a nod to the question posed by the robot 100, the emotion value decision unit 112 decides that the emotion value of the customer is a positive value. Furthermore, for example, in a case where the customer's response indicated by the customer's response information includes making an off-topic answer to the a question posed by the robot 100, and tilting one's head in response to the question posed by the robot 100, the emotion value decision unit 112 decides that the emotion value of the customer is a negative value. Furthermore, for example, in a case where the customer's response indicated by the customer's response information includes echoing back the question posed by the robot 100, and making a question in response to a question posed by the robot 100, the emotion value decision unit 112 decides that the emotion value of the customer is a value of 0.

The emotion value decision unit 112 may decide the emotion value of the customer based on an analysis result obtained by analyzing the image data of the customer captured by the 2D camera 203 and the voice data of the customer detected by the microphone 201, and based on the response information of the customer. In this case, for example, the emotion value decision unit 112 may decide the total value of the value determined based on the analysis result obtained by analyzing the image data of the customer and the voice data of the customer and the value decided based on the response information of the customer, as the emotion value of the customer.

The selection unit 113 selects one talk step from among a plurality of talk steps stored in the storage unit 130. For example, the selection unit 113 selects the one talk step based on the story of the sales talk indicated by the story information stored in the storage unit 130.

For example, in a case where the robot 100 selects the first talk step to start the talk with the customer, the selection unit 113 selects the first talk step based on the emotion value of the customer before the robot 100 starts the talk with the customer, which has been decided by the emotion value decision unit 112. The selection unit 113 selects the first talk step so as to increase the customer satisfaction level achieved by the sales activity by the robot 100, for example. For example, the selection unit 113 selects the first talk step so as to increase the emotion value of the customer. The selection unit 113 selects the first talk step so as to set the emotion value of the customer to a positive value.

For example, the selection unit 113 selects a talk step next to one talk step from among a plurality of talk steps stored in the storage unit 130. For example, the selection unit 113 selects the next talk step based on the story of the sales talk indicated by the story information stored in the storage unit 130.

For example, the selection unit 113 selects the next talk step based on the emotion value of the customer while the robot 100 is talking with the customer based on the one talk step decided by the emotion value decision unit 112. For example, the selection unit 113 selects the next talk step so as to increase the customer satisfaction level achieved by the sales activity by the robot 100. For example, the selection unit 113 selects the next talk step so as to increase the emotion value of the customer. The selection unit 113 selects the next talk step so as to set the emotion value of the customer constantly to a positive value.

For example, in a case where the emotion value of the customer indicates that the customer's emotion is a positive emotion while the robot 100 is talking with the customer based on the one talk step, the selection unit 113 may select the next talk step so that the customer's emotion maintains the positive emotion. In a case where the emotion value of the customer indicates that the customer's emotion is a positive emotion while the robot 100 is talking with the customer based on the one talk step, the selection unit 113 may select the next talk step so that the customer's emotion becomes a more positive emotion.

On the other hand, in a case where the emotion value of the customer indicates that the customer's emotion is a negative emotion while the robot 100 is talking with the customer based on the one talk step, the selection unit 113 may select the next talk step so as to reduce the negative emotion of the customer. In a case where the emotion value of the customer indicates that the customer's emotion is a negative emotion while the robot 100 is talking with the customer based on the one talk step, the selection unit 113 may select the next talk step so that the customer's emotion transitions from the negative emotion to the positive emotion.

In a case where the emotion value of the customer indicates that the customer's emotion is a negative emotion while the robot 100 talks with the customer based on the one talk step, the selection unit 113 may select a behavior of the robot 100 of asking a question to the customer in order to clarify a factor of the negative emotion in the customer while the robot 100 talks with the customer based on the one talk step. In this case, the selection unit 113 may interrupt the story of the sales talk indicated by the story information as necessary.

For example, the selection unit 113 selects a talk step next to the one talk step from among a plurality of talk steps stored in the storage unit 130, thereby selecting a behavior of the robot 100 of asking a question to the customer. For example, the selection unit 113 selects the next talk step from a plurality of talk steps having a talk theme classified as "Question & Answer". The selection unit 113 may select the behavior of the robot 100 of asking a question to the customer by selecting a question for the customer from a question list for clarifying a factor of the negative emotion in the customer stored in the storage unit 130 separately from the talk step.

The attribute specifying unit 114 specifies an attribute of the customer. For example, the attribute specifying unit 114 specifies the attribute of the customer based on the customer-related information acquired by the information acquisition unit 122. For example, the attribute specifying unit 114 specifies the attribute of the customer by performing image analysis on the image data of the customer included in the customer-related information. For example, the attribute specifying unit 114 specifies the attribute of the customer by performing voice analysis on the voice data of the customer included in the customer-related information. The attribute specifying unit 114 may specify the attribute of the customer based on the response information of the customer acquired by the information acquisition unit 122.

The storage unit 130 may store the plurality of talk steps in association with attribute data indicating the attribute of the customer. The storage unit 130 may store story information in association with the attribute data of the customer.

The attribute of the customer includes, for example, an attribute based on the age of the customer. The attribute of the customer includes, for example, an attribute based on the gender of the customer. The attribute of the customer includes, for example, an attribute based on a family structure of the customer. The attribute of the customer includes, for example, an attribute based on a purchase condition of the customer. The attribute of the customer includes, for example, an attribute based on interests of the customer. The attribute of the customer includes, for example, an attribute based on tastes and preferences of the customer. The attribute of the customer may include an attribute based on any other information.

The attribute of the customer includes, for example, "twenties". The attribute of the customer includes, for example, "elderly person". The attribute of the customer includes, for example, "female". The attribute of the customer includes, for example, "male". The attribute of the customer includes, for example, "unmarried man". The attribute of the customer includes, for example, "father". The attribute of the customer includes, for example, "camping lover". The attribute of the customer includes, for example, "outdoor person". The attribute of the customer may include any other attribute.

For example, the selection unit 113 selects one talk step from among a plurality of talk steps stored in the storage unit 130 based on the attribute of the customer specified by the attribute specifying unit 114. For example, the selection unit 113 selects the one talk step so that the robot 100 sells an item more satisfying the needs of the customer with the attribute specified by the attribute specifying unit 114 to the customer.

For example, the selection unit 113 selects the one talk step further based on the research result stored in the storage unit 130. For example, the selection unit 113 specifies the need of the customer with the attribute specified by the attribute specifying unit 114 from the research result, and selects the one talk step so that the robot 100 sells an item more satisfying the specified need, to the customer. For example, when the attribute of the customer specified by the attribute specifying unit 114 is "male in his 40s" and the research result of "Male in his 40s has a purchase intention of ○○% for X company's car Y" indicates that males in their 40s have high intentions to purchase the car Y of the X company, the selection unit 113 selects the one talk step so that the robot 100 sells the car Y of the X company to the customer.

For example, the selection unit 113 selects the one talk step further based on the item-related information stored in the storage unit 130. For example, the selection unit 113 specifies the need of the customer from the attribute of the customer specified by the attribute specifying unit 114, and selects the one talk step so that the robot 100 sells an item more satisfying the specified need, to the customer. For example, when the attribute of the customer specified by the attribute specifying unit 114 is "budget of 5 million yen", the selection unit 113 selects the one talk step so that the robot 100 sells a car under 5 million yen to the customer.

For example, the selection unit 113 selects the one talk step further based on the target market information stored in the storage unit 130. For example, the selection unit 113 selects the one talk step so that the robot 100 sells, to the customer, an item including the attribute of the customer specified by the attribute specifying unit 114 in the target market. For example, when the attribute of the customer specified by the attribute specifying unit 114 is "father", the selection unit 113 selects the one talk step so that the robot 100 sells, to the customer, a family car including "family" in the target market. Furthermore, for example, in a case where the attribute of the customer specified by the attribute specifying unit 114 is "camping lover" and "outdoor person", the selection unit 113 selects the one talk step so that the robot 100 sells, to the customer, a camper including "camping lover" and "outdoor person" in the target market.

For example, the selection unit 113 selects a talk step next to the one talk step from among the plurality of talk steps stored in the storage unit 130 based on the emotion value of the customer while the robot 100 is talking with the customer based on the one talk step decided by the emotion value decision unit 112 and the attribute of the customer specified by the attribute specifying unit 114. For example, the selection unit 113 selects the next talk step so that the robot 100 sells an item more satisfying the needs of the customer with the attribute specified by the attribute specifying unit 114 to the customer.

For example, the selection unit 113 selects the next talk step further based on the research result stored in the storage unit 130. For example, the selection unit 113 specifies the need of the customer with the attribute specified by the attribute specifying unit 114 from the research result, and selects the next talk step so that the robot 100 sells an item more satisfying the specified need, to the customer.

For example, the selection unit 113 selects the next talk step further based on the item-related information stored in the storage unit 130. For example, the selection unit 113 specifies the need of the customer from the attribute of the customer specified by the attribute specifying unit 114, and selects the next talk step so that the robot 100 sells an item more satisfying the specified need, to the customer.

For example, the selection unit 113 selects the next talk step further based on the target market information stored in the storage unit 130. For example, the selection unit 113 selects the next talk step so that the robot 100 sells, to the customer, an item including the attribute of the customer specified by the attribute specifying unit 114 in the target market.

The storage unit 130 may store learning data. The learning data includes attribute data of the customer, an emotion value of the customer while the robot 100 is talking with the customer based on one talk step, and an emotion value of the customer while the robot 100 is talking with the customer based on a talk step next to the one talk step.

The attribute of the customer indicated by the attribute data included in the learning data may be specified by the attribute specifying unit 114. The emotion values included in the learning data, namely, the emotion value of the customer while the robot 100 is talking with the customer based on the one talk step and the emotion value of the customer while the robot 100 is talking with the customer based on the next talk step, may be decided by the emotion value decision unit 112.

The model generator 115 generates, by machine learning, a selection model that selects a next talk step of one talk step. For example, using a plurality of pieces of learning data stored in the storage unit 130 as teaching data, the model generator 115 generates, by machine learning, a selection model that selects the next talk step so as to increase the emotion value of the customer based on the attribute of the customer indicated by the attribute data of the customer and the emotion value of the customer while the robot 100 is talking with the customer based on the one talk step. The model generator 115 stores the generated selection model in the storage unit 130.

The selection unit 113 may select a talk step next to one talk step by using the selection model stored in the storage unit 130. For example, the selection unit 113 uses the selection model to select the next talk step based on the attribute of the customer specified by the attribute specifying unit 114 and the emotion value of the customer decided by the emotion value decision unit 112 while the robot 100 is talking with the customer based on the one talk step.

The server 300 illustrated in FIG. 19 generates, by machine learning, a selection model that selects a next talk step of one talk step by using a plurality of pieces of learning data including emotion values of a customer during past sales activities to the customer by the robot 100 as teaching data. By using the plurality of pieces of learning data as teaching data, for example, in a case where the emotion of a customer while the robot 100 is talking with the customer based on one talk step is a negative emotion, the server 300 can perform machine learning on what type of talk step selected as a next talk step of the one talk step causes transition of the emotion of the customer from the negative emotion to the positive emotion. Furthermore, for example, in a case where the emotion of a customer while the robot 100 is talking with the customer is a positive emotion based on one talk step, the server 300 can perform machine learning on what type of talk step selected as a next talk step of the one talk step caused transition of the emotion of the customer from the positive emotion to the negative emotion. Accordingly, by selecting the next talk step of one talk step using the selection model generated by machine learning, the server 300 can select the next talk step so as to allow the customer's emotion to transition from the negative emotion to a more positive emotion in a case where the customer's emotion is a negative emotion, and so as to maintain a more positive emotion in the customer's emotion in a case where the customer's emotion is a positive emotion. Furthermore, by continuing to accumulate the learning data to increase the number of pieces of learning data and generating the selection model by using more pieces of learning data as teaching data, it is possible to permanently evolve the sales talk to the customer by the robot 100.

The update unit 116 updates the target market information stored in the storage unit 130. For example, when the customer purchases an item that does not include the attribute of the customer specified by the attribute specifying unit 114 in the target market as a result of the sales activity to the customer by the robot 100, the update unit 116 updates the target market information so as to include the attribute of the customer in the target market of the item purchased by the customer. For example, when the attribute of the customer specified by the attribute specifying unit 114 is "unmarried man" and "camping lover" and the customer purchased a car including "family" but not including "unmarried man" or "camping lover" in the target market, the target market information is updated so as to add "unmarried man" and "camping lover" to the target market of the car. In the updated target market information, the target market of the vehicle includes "family", "unmarried man", and "camping lover". When updating the target market information, the update unit 116 may transmit the updated target market information to the manufacturer of the vehicle.

### (Fourth embodiment)

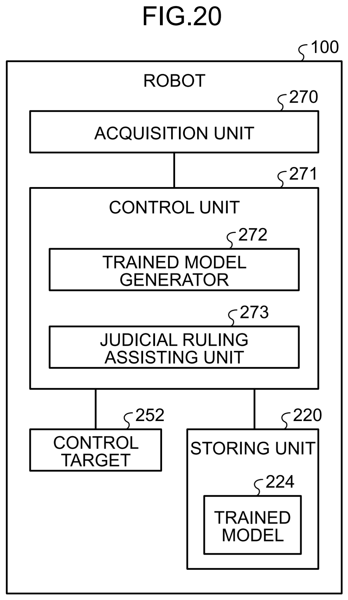

Next, an example of the robot 100 according to a fourth embodiment will be described with reference to FIG. 20. The robot 100 is an example of a judicial ruling assistant device. The description of the same configuration and the like as those of the above-described embodiment will be omitted. FIG. 20 schematically illustrates a functional configuration of the robot 100. The robot 100 is one or more robots 100 that assist judicial ruling. The robot 100 is implemented by, for example, an artificial intelligence (AI) humanoid robot capable of recognizing emotions such as Pepper (registered trademark), and is used for moot court trials in educational institutions such as universities and judicial training offices and courts, and other opportunities such as legal debates and discussions. As illustrated in FIG. 20, the robot 100 includes an acquisition unit 270, a control unit 271, a control target 252, and a storing unit 220. In the example illustrated in FIG. 20, the number of robots 100 is one, but may be two or more.

The acquisition unit 270 acquires at least one of legal data related to a law, judgment data related to a judgment, case data related to a case, and trial data related to a trial. With this configuration, the acquisition unit 270 can accumulate a large amount of legal data, judgment data, case data, and trial data. As an example, the acquisition unit 270 acquires judgment data related to judgments from which past miscarriage of justice have been excluded. As another example, the acquisition unit 270 acquires case data related to at least one of an outline of the case, a fact of the case, and evidence of the case. As another example, the acquisition unit 270 acquires trial data related to at least one of a conversation in a trial, an expression of a participant, a video, an audio, and a document. Specifically, the acquisition unit 270 acquires trial data such as a trial record including at least one of these.

The control unit 271 performs overall control of the robot 100. As an example, the control unit 271 is implemented by executing various programs stored in a storage device inside the robot 100 using RAM as a work area by a Central Processing Unit (CPU), a Micro Processing Unit (MPU), or the like. As another example, the control unit 271 is implemented by an integrated circuit such as an Application Specific Integrated Circuit (ASIC) or a Field Programmable Gate Array (FPGA). In the example illustrated in FIG. 20, the control unit 271 includes a trained model generator 272 and a judicial ruling assisting unit 273.

The trained model generator 272 generates a trained model 224 using at least one of the legal data, the judgment data, the case data, and the trial data, having been acquired by the acquisition unit 270. When having input of at least one of legal data, judgment data, case data, and trial data, the trained model 224 outputs data that is not input among the legal data, the judgment data, the case data, and the trial data. As an example, the trained model generator 272 uses the legal data, the judgment data, the case data, and the trial data acquired by the acquisition unit 270 as teaching data to generate a text generation model having a dialogue function including the trained model 224 that outputs the judgment data, the judgment data, and the case data when the trial data has been input. As another example, the trained model generator 272 uses the legal data, the judgment data, the case data, and the trial data acquired by the acquisition unit 270 as teaching data to generate a text generation model having a dialogue function including the trained model 224 that outputs the judgment data and the trial data when the legal data and the case data have been input. The text generation model having a dialogue function is implemented by a technique such as Chat Generative Pretrained Transformer) (ChatGPT), for example.

The judicial ruling assisting unit 273 assists judicial ruling based on at least one of legal data, judgment data, case data, and trial data, having been acquired by the acquisition unit 270. With this configuration, the judicial ruling assisting unit 273 can suggest a discussion and a judgment based on objective and reasonable ruling, and assist an appropriate judicial ruling. In particular, it is possible to avoid and reduce miscarriage of justice and speed up trials in a country in which judicial ruling is not yet fully developed, making it possible to assist to achieve fair judicial ruling. As an example, the judicial ruling assisting unit 273 assists judicial ruling based on the judgment data related to the judgment excluding the past miscarriage of justice acquired by the acquisition unit 270. This makes it possible for the judicial ruling assisting unit 273 to facilitate avoidance of miscarriage of justice. As another example, the judicial ruling assisting unit 273 assists the judicial ruling based on the case data related to at least one of the outline of the case, the fact, and the evidence acquired by the acquisition unit 270. With this configuration, the judicial ruling assisting unit 273 can easily avoid miscarriage of justice, judgments based on erroneous information, person-dependent rulings, or unreasonable judgments. As another example, the judicial ruling assisting unit 273 assists the judicial ruling based on the trial data related to at least one of the conversation in the trial, the expression of the participant, the video, the voice, and the document, acquired by the acquisition unit 270. With this configuration, the judicial ruling assisting unit 273 can easily avoid miscarriage of justice, judgments based on erroneous information, person-dependent rulings, or unreasonable judgments.

The judicial ruling assisting unit 273 may use the trained model 224 that outputs data such that when at least one of the legal data, the judgment data, the case data, and the trial data acquired by the acquisition unit 270 has been input, data that has not been input among the legal data, the judgment data, the case data, and the trial data is to be output, so as to present the data output from the trained model 224 to the control target 252. With this configuration, the judicial ruling assisting unit 273 can suggest a discussion and a judgment based on more objective and reasonable rulings, and can further assist a fair judicial ruling. The judicial ruling assisting unit 273 may assist the judicial ruling using a text generation model having a dialogue function including the trained model 224. With this configuration, the judicial ruling assisting unit 273 can further assist fair judicial rulings.

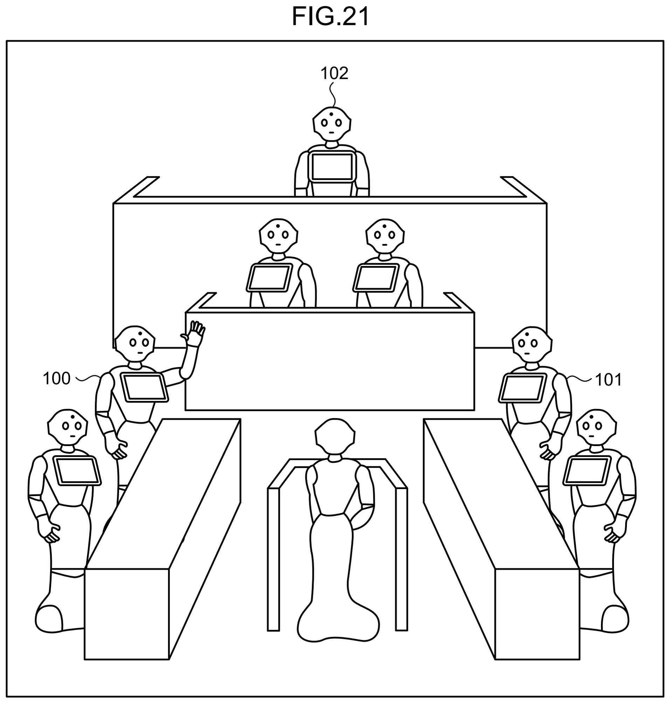

The judicial ruling assisting unit 273 may cause the robots 100 or the robot 100 and a human to perform a moot court trial, and may cause the control target 252 to present data including trial data related to the moot court trial. With this configuration, the judicial ruling assisting unit 273 can suggest a discussion and a judgment based on particularly objective and reasonable rulings. Hereinafter, an example of a judicial ruling by the judicial ruling assisting unit 273 will be described with reference to FIG. 21. FIG. 21 is a diagram for illustrating an example of the robot 100 according to the fourth embodiment. As illustrated in FIG. 21, when the robot 100 includes a plurality of robots 100, 101, and 102 as AI robots such as Pepper, the judicial ruling assisting unit 273 causes each of the plurality of robots 100 to 102 to serve as an attorney for the plaintiff, an attorney for the defendant, and a judge, and causes the robots 100 to 102 to have a conversation with each other to perform a moot court trial. As an example, the judicial ruling assisting unit 273 of each of the robot 100 and the robot 101, each serving as the attorney, causes the control target 252 to present at least one of the legal data, case example data, and fact data output from the trained model 224, and performs a dialogue such as an argument having an advantage over the other. As another example, the judicial ruling assisting unit 273 of the robot 102 serving as a judge causes the control target 252 to present data including trial data related to the process and result of the moot court trial, such as a simulation result output from the trained model 224 in the form of a trial record, and performs a dialogue such as proceeding of the trial, rulings of the judgment, and reasoning. The judicial ruling assisting unit 273 of the robot 102 serving as the judge causes the control target 252 to present the above-described simulation result as a trial record, and leaves it to the judge how to utilize the simulation result for a final decision. In the example illustrated in FIG. 21, the judicial ruling assisting unit 273 causes the robots 100 to 102 to perform a moot court trial, but the target for performing the moot court trial is not limited to such a form. For example, the judicial ruling assisting unit 273 may set a moot court trial by the robot 100 vs. a human, or may set training for a witness by the robot 100 vs. a human (such as a witness). In addition, it is also allowable to use the robot 100 to perform a moot court trial for an identical case in parallel with an actual trial so as to assist the judicial ruling. The trained model generator 272 may re-train the trained model 224 using information related to the judicial ruling in an actual trial.

The description returns to FIG. 20. The judicial ruling assisting unit 273 may cause the robot 100 to perform an operation based on emotion. For example, in any of the moot court trial between the robots 100, the moot court trial between the robot 100 and the human, and the training for a witness by the robot 100 and the human (such as a witness), the robot recognizes the emotion of the other party, generates the emotion of the robot itself, and performs an operation such as conversation and behavior reflecting the emotion. With this configuration, as compared with a case where a known text generation model is used, specifically, where the robot of an attorney on the plaintiff side having a text generation model equipped with a dialogue function such as ChatGPT and the robot of an attorney on the defendant side having the similar function simply fight each other, and the robot of the judge having the similar function determines which side is more credible, the judicial ruling assisting unit 273 can give visual inspiration by the motion based on the emotion of the robot 100 to the judge and related persons, making it possible to enhance the sense of reality. Since the emotion recognition method and the emotion generation method are similar to the methods described in Patent Literatures 2 to 6, the detailed description thereof will be omitted. The emotion recognition method is not limited to these methods, and other known methods may be used.

The judicial ruling assisting unit 273 may cause the control target 252 to present data including trial data related to the moot court trial to at least one of the judge, the public prosecutor, the attorney, the witness, and the jury. For example, the judicial ruling assisting unit 273 causes the control target 252 to present the trial data (and the judgment data) related to the moot court trial to the judge, and causes the control target 252 to present at least one of the legal data, the judgment data, and the case data to the attorney. With this configuration, the judicial ruling assisting unit 273 can suggest a discussion and a judgment based on further objective and reasonable rulings.

The judicial ruling assisting unit 273 may cause the control target 252 to present data including trial data that has recorded at least one of emotions and actions of participants in the moot court trial. For example, in addition to the document, the judicial ruling assisting unit 273 of the robot serving as a judge causes the control target 252 to present, as trial data, a trial record that has further recorded emotions and actions of the robot or the person of the speaker or the listener together with data related to speech and video such as conversations and remarks that are not supposed to be recorded. As an example, in a case where the robot 100 serves as a witness, the judicial ruling assisting unit 273 of the robot 102 serving as a judge causes the control target 252 to present a trial record that has further recorded emotions (irritation, anxiety, security, and the like) generated by the robot 100 during testimony in the witness examination. As another example, in a case where a human is a witness, the judicial ruling assisting unit 273 of the robot 102 serving as a judge causes the control target 252 to present a trial record that has further recorded human emotions recognized by the robot 100 serving another role during the testimony in the witness examination. This makes it possible for the judicial ruling assisting unit 273 to clarify the flow of the trial.

The control target 252 presents data output from the trained model 224. The control target 252 is an example of a presentation unit. The presentation method by the control target 252 is not particularly limited. For example, in a case where the control target 252 is the speaker 2522, the presentation may be performed by outputting a voice. In a case where the control target 252 is the display device 2521, the presentation may be performed by displaying texts, symbols, and the like, or may be performed through communication.

The storing unit 220 stores various data and various programs such as legal data, judgment data, case data, trial data, and the trained model 224. The storing unit 220 is an example of a storage unit. The storing unit 220 is implemented by, for example, a semiconductor memory element such as RAM or flash memory, or a storage device such as a hard disk or an optical disk.

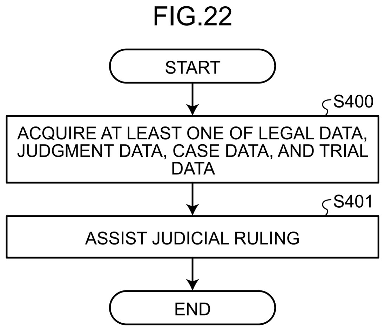

An example of processing performed by the robot 100 according to the fourth embodiment will be described with reference to FIG. 22. FIG. 22 schematically illustrates an example of an operation flow by the robot 100.

In step S400, the acquisition unit 270 acquires at least one of legal data related to law, judgment data related to judgment, case data related to case, and trial data related to trial. For example, when having received a request related to a moot court trial, the acquisition unit 270 acquires at least one of legal data, judgment data, case data, and trial data.

In step S401, the judicial ruling assisting unit 273 assists the judicial ruling based on at least one of the legal data, the judgment data, the case data, and the trial data acquired by the acquisition unit 270. For example, the judicial ruling assisting unit 273 causes the robots 100 or the robot 100 and a human to perform a moot court trial, and causes the control target 252 to present data including trial data related to the moot court trial output from the text generation model having a dialogue function.

### (Fifth embodiment)

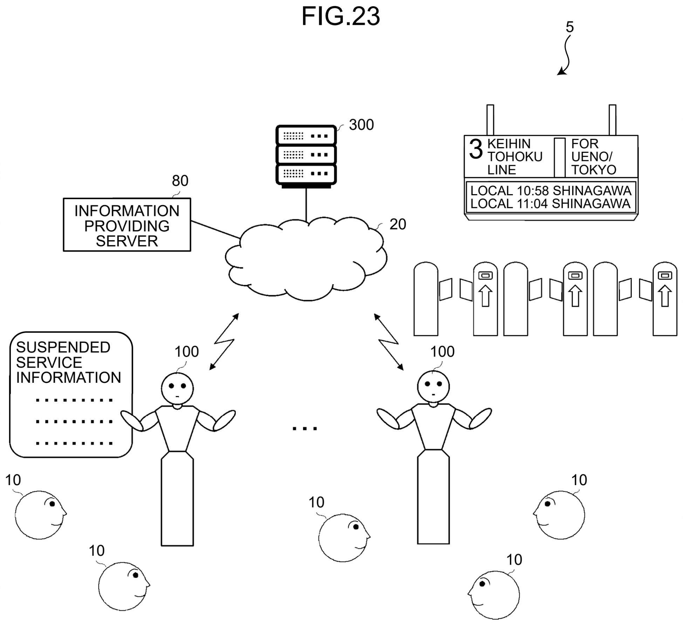

Next, a system 5 according to a fifth embodiment will be described with reference to FIG. 23. The description of the same configuration and the like as those of the above-described embodiment will be omitted. FIG. 23 schematically illustrates an example of an overall configuration of the system 5 according to the fifth embodiment. The server 300 can function as a control system. The robot 100 may be an example of a control target object of the control system. The system 5 may be an example of a control system.

The robot 100 is disposed in public transportation. The user 10 is a user who uses public transportation. The robot 100 provides the user 10 with information related to public transportation. The robot 100 is disposed at a facility related to a railway, for example. As a specific example, the robot 100 is disposed near a ticket machine of a station, near a ticket gate of a station, a platform of a station, and the like. The robot 100 may be disposed in a facility related to a bus, a taxi, an aircraft, a ship, and the like.

For example, based on the information acquired from the robot 100, the server 300 uses a neural network (NN) to generate control information for controlling the robot 100.

In public transportation, when a trouble such as a delay occurs, a station staff, a salesclerk, or the like generally gives a verbal explanation or a support to the user. However, this leads to a possibility of the need of complaints handling, which produces a heavy burden on the station staff, the salesclerk, and the like. For example, when a trouble occurs in public transportation, the system 5 according to the fifth embodiment automatically searches for a detour or an alternative means, and assists the user 10 with explanation using the robot 100. This makes it possible to reduce the burden on the station staff, the salesclerk, and the like.

For example, the server 300 receives, via the communication network 20, information related to public transportation from an information providing server 80 that provides information related to public transportation. In normal times with no trouble occurring in public transportation, the server 300 provides various types of information to the user 10 via the robot 100 based on the information received from the information providing server 80.

When a trouble occurs in public transportation, the server 300 specifies an alternative means corresponding to the trouble. The server 300 receives, for example, information of an alternative means corresponding to the trouble from the information providing server 80. In a case where the information providing server 80 does not provide the information of the alternative means corresponding to the trouble, the server 300 may specify the alternative means on its own using the information received from the information providing server 80.

The server 300 has a function of recognizing the emotion of the user 10. The server 300 may specify the user emotion value indicating the emotion of the user 10 from the expression of the user 10 or the conversation with the user 10, and may use the robot 100 to take an action according to the user emotion value. For example, the system 5 calms down the user 10 who is angry or the user 10 who feels anxious, and then appropriately guides the user 10 with information required by the user 10. In a situation where the user 10 is angry or feeling anxious, the user 10 has a lower comprehension level regarding the content described by the robot 100 to the user 10. Still, by the action of the system 5 to perform communication so as to suppress the anger and anxiety while monitoring the transition of the emotion of the user, and to give explanation of alternative means or the like after confirming that the user 10 has settled, it is possible to efficiently handle the trouble.

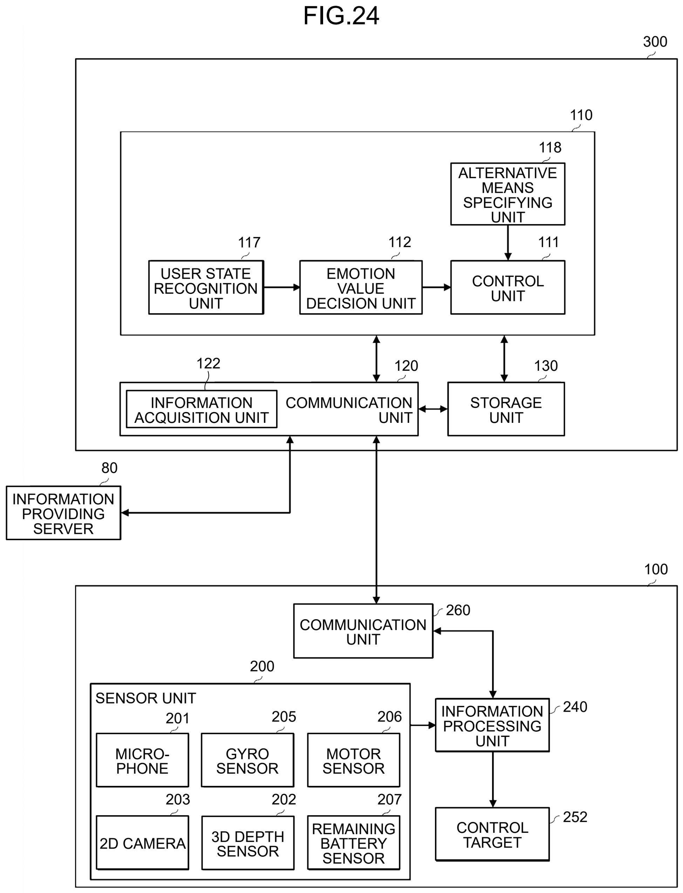

FIG. 24 schematically illustrates an example of functional block configurations of the robot 100 and the server 300 according to the fifth embodiment. The server 300 includes an information processing unit 110, a communication unit 120, and a storage unit 130. The information processing unit 110 includes a control unit 111, a user state recognition unit 117, an emotion value decision unit 112, and an alternative means specifying unit 118. The communication unit 120 includes an information acquisition unit 122.

The communication unit 120 communicates with the information providing server 80, for example. For example, the information acquisition unit 122 acquires information related to public transportation provided by the information providing server 80 through the communication network 20.

The storage unit 130 stores, for example, information related to public transportation acquired from the information providing server 80. The storage unit 130 stores guide information for guiding the user 10 to information related to public transportation. The control unit 111 may control the robot 100 so as to output the guidance information stored in the storage unit 130 to the user 10.

The user state recognition unit 117 recognizes the state of the user 10 based on the information acquired by the information acquisition unit 122. The user state recognition unit 117 may analyze the captured image captured by the 2D camera 203 to recognize the face of the user 10. For example, the storage unit 130 stores face images of a plurality of persons, and the user state recognition unit 117 recognizes the face of the user 10 by checking the match between the captured image and the stored face image. The user state recognition unit 117 may analyze the captured image captured by the 2D camera 203 to recognize the expression of the user 10. The user state recognition unit 117 may analyze the voice of the user 10 detected by the microphone 201 to recognize the speech content of the user 10. The user state recognition unit 117 may analyze the voice of the user 10 detected by the microphone 201 to execute voice emotion recognition. For example, the user state recognition unit 117 extracts a feature such as a frequency component of a voice, and recognizes the emotion of the user 10 based on the extracted feature.

The user state recognition unit 117 may recognize the action of the user 10 based on the information acquired by the information acquisition unit 122. For example, the user state recognition unit 117 stores in advance a neural network that outputs an action of the user 10 from information acquired by the information acquisition unit 122, which has been trained with the information acquired by the information acquisition unit 122 and the actual action of the user 10 when the information acquisition unit 122 acquired the information as training data, and recognizes the action of the user by inputting the information acquired by the information acquisition unit 122 to the neural network. The neural network may be configured to receive the expression of the user 10 and the speech content of the user 10 recognized by the user state recognition unit 117. The method of recognizing the user's action is not limited to this, and other known methods may be used.

The emotion value decision unit 112 decides a user emotion value indicating the emotion of the user 10 having a conversation with the robot 100. The emotion value decision unit 112 may decide the user emotion value of the user 10 using the information acquired by the information acquisition unit 122. The emotion value decision unit 112 may decide the user emotion value of the user 10 using the user state recognized by the user state recognition unit 117. When the voice emotion recognition has been executed by the user state recognition unit 117, the emotion value decision unit 112 may decide the user emotion value of the user 10 using the information acquired by the information acquisition unit 122 and the voice emotion recognition result.

The user emotion value may include a type of emotion of the user 10, and a value indicating a positive/negative of emotion and a degree of emotion of the user 10. Types of emotions of the user 10 include "delighted", "joyful", "pleasant", "secure", "excited", "relieved", "fulfilled", "angry", "sad", "unpleasant", "anxious", "sorrowful", "worried", and "empty". These are examples, and the type is not limited thereto. The emotion value indicating the positive/negative of the emotion of the user 10 is a value that indicates a positive value when the emotion of the user 10 is a bright emotion accompanied with pleasure or comfort, such as "delighted", "joyful", "pleasant", "secure", "excited", "relieved", and "fulfilled", and the emotion value becomes a larger value as the emotion is brighter. When the user's emotion is a negative emotion, such as "angry", "sad", "unpleasant", "anxious", "sorrowful", "worried", and "empty", the value indicates a negative value, and the absolute value of the negative value is larger as the user feels more unpleasant. In a case where the user's emotion is not any of the above ("neutral"), the value indicates a value of 0.

For example, the emotion value decision unit 112 stores in advance a neural network that outputs an emotion value of the user 10 from information acquired by the information acquisition unit 122, which has been trained with the information acquired by the information acquisition unit 122 and the user emotion value indicating actual emotion of the user 10 when the information acquisition unit 122 acquired the information as training data, and acquires the user emotion value by inputting the information acquired by the information acquisition unit 122 to the neural network. The neural network may be configured to receive the expression of the user 10 and the speech content of the user 10 recognized by the user state recognition unit 117. The method of deciding the user emotion value is not limited thereto, and other known methods may be used.

When a trouble occurs in public transportation, the alternative means specifying unit 118 specifies an alternative means corresponding to the trouble. Examples of the trouble of the public transportation include, but are not limited to, a delay, disruption of a train schedule, an accident, and a failure.

For example, when a trouble occurs in public transportation, the alternative means specifying unit 118 receives information regarding an alternative means from the information providing server 80 to specify an alternative means. As a specific example, there is a case where a target public transportation is a railway and the information providing server 80 provides information related to the railway. When a trouble occurs in the railway in this case, and in a case where the information providing server 80 provides information of a route to be an alternative to the route in which the trouble occurs, the alternative means specifying unit 118 receives the information to specify the alternative means.

In a case where the information providing server 80 does not provide information on alternative means, or the like, the alternative means specifying unit 118 may receive information indicating the status of public transportation from the information providing server 80 and specify the alternative means on its own from the information. As a specific example of a case where the target public transportation is a railway, when having received information regarding a route in which a trouble has occurred from the information providing server 80, the alternative means specifying unit 118 specifies a route to be an alternative to the route in which the trouble has occurred, as the alternative means.

The alternative means specifying unit 118 specifies, for example, an individual support alternative means corresponding to each user 10. For example, for a certain user 10, the alternative means specifying unit 118 specifies an alternative means according to a destination of the user 10 as the individual support alternative means. The alternative means specifying unit 118 may specify an alternative means corresponding to the destination and the desired arrival time of the user 10 as the individual support alternative means. As a specific example, when the robot 100 receives an inquiry including the destination and the desired arrival time of the user 10 from the user 10, the alternative means specifying unit 118 specifies an individual support alternative means corresponding to the destination date and the desired arrival time.
Furthermore, for example, in a case where the robot 100 receives from the user 10 an inquiry not including the destination or the desired arrival time of the user 10, the control unit 111 causes the robot 100 to ask about the destination and the desired arrival time of the user 10, and the alternative means specifying unit 118 specifies the individual support alternative means in accordance with the answer.

For example, the alternative means specifying unit 118 specifies a multiple support alternative means corresponding to a plurality of users 10. The multiple support alternative means may be a comprehensive alternative means, rather than the means of individually supporting a plurality of users 10. For example, in a case where the public transportation is a railway, when a trouble occurs in a certain route, the multiple support alternative means includes an alternative route.

When the robot 100 has received an inquiry from the user 10 of the public transportation in a case where a trouble occurs in the public transportation, the control unit 111 may cause the robot 100 to output, to the user 10, the explanation of the alternative means specified by the alternative means specifying unit 118. In this manner, with the explanation of the alternative means to the user 10 by the robot 100 disposed in the public transportation, it is possible to reduce the load on the station staff, the salesclerk, and the like.

In a case where the robot 100 receives an inquiry from the user 10, the control unit 111 may control the robot 100 to take an action of calming the user 10 and then control the robot 100 to output, to the user 10, an explanation of the alternative means specified by the alternative means specifying unit 118. In a case where a trouble occurs in public transportation, the user 10 feels angry or anxious with high probability. Explaining about the alternative means to the user 10 in such a state might lead to the state where the user 10 cannot correctly understand the alternative means or holds intensified negative emotions. In contrast, by causing the robot 100 to take an action of calming the user 10 to calm the user 10, it is possible to increase the degree of understanding of the explanation of the alternative means and to reduce the possibility of filing a complaint due to intensified negative emotions.

The content of the action of calming the user 10 may be preregistered and stored in the storage unit 130. The control unit 111 may control the robot 100 in accordance with the information indicating the content of the action of calming the user 10 stored in the storage unit 130. Examples of the action of calming the user 10 include, but are not limited to, apologies, explanation of a trouble situation, explanation of a cause of a trouble, and playing music that makes the user feel calm.

The control unit 111 may cause the robot 100 to take an action corresponding to the emotion value of the user 10 decided by the emotion value decision unit 112. This makes it possible to cause the robot 100 to take an action suitable for the state of the user 10.

For example, in a case where the emotion value of the user 10 indicates anger, the control unit 111 causes the robot 100 to take an action for reducing the anger. The content of the action of reducing the anger of the user 10 may be preregistered and stored in the storage unit 130. The control unit 111 may control the robot 100 in accordance with the information indicating the content of the action for reducing the anger stored in the storage unit 130. Examples of the action for reducing the anger of the user 10 include, but are not limited to, apologies and playing of music that makes the user feel calm.

For example, in a case where the emotion value of the user 10 indicates anxiety, the control unit 111 causes the robot 100 to take an action for reducing the anxiety. The content of the action of reducing the anxiety of the user 10 may be preregistered and stored in the storage unit 130. The control unit 111 may control the robot 100 in accordance with the information indicating the content of the action for reducing the anxiety stored in the storage unit 130. Examples of the action for reducing the anxiety of the user 10 include, but are not limited to, explanation of a situation of trouble and explanation of a cause of trouble.

The control unit 111 may cause the robot 100 to take an action corresponding to the magnitude of the emotion value of the user 10. This makes it possible to cause the robot 100 to take an action further suitable for the state of the user 10.

For example, in a case where the emotion value of the user 10 indicates anger, the control unit 111 causes the robot 100 to take an action corresponding to the degree of anger. The action corresponding to the degree of anger may be preregistered and stored in the storage unit 130. Examples of the action corresponding to the degree of anger include, but are not limited to, apologies with strength corresponding to the degree of anger.

For example, in a case where the emotion value of the user 10 indicates anxiety, the control unit 111 causes the robot 100 to take an action corresponding to the degree of anxiety. The action corresponding to the degree of anxiety may be preregistered and stored in the storage unit 130. Examples of the action corresponding to the degree of anxiety include, but are not limited to, giving a more detailed explanation of the situation of the trouble or a more detailed explanation of the cause of the trouble, and adding an explanation of the possibility of resolving the trouble in a case where the degree of anxiety is higher than a threshold.

The control unit 111 may cause the robot 100 to output the explanation of the multiple support alternative means to the plurality of users 10 when explaining the alternative means for the plurality of users 10, and may cause the robot 100 to output the explanation of the individual support alternative means to each of the plurality of users 10 when explaining the alternative means for each of the plurality of users 10.

For example, the control unit 111 causes the robot 100 to output the explanation of the multiple support alternative means through a speaker when explaining the alternative means simultaneously for the plurality of users 10, and may cause the robot 100 to output the explanation of the individual support alternative means to each of the plurality of users 10 when explaining the alternative means toward each of the plurality of users 10. At this time, the control unit 111 may cause the robot 100 to output the explanation of the multiple support alternative means through a speaker, and may control to display and output the individual support alternative means to each of the plurality of users 10. This makes it possible to individually support each user 10 while conveying alternative means to a large number of users 10, enabling efficient support of a large number of users 10 affected by a trouble of public transportation.

In a case where a trouble occurs in public transportation, the control unit 111 may start the explanation of the multiple support alternative means, and in a case where an inquiry is individually received from the user 10, the control unit 111 may provide the user 10 with an explanation of the individual support alternative means specified by the alternative means specifying unit 118 corresponding to the inquiry. The control unit 111 may resume the explanation of the multiple support alternative means after completion of the explanation of the individual support alternative means.

When a trouble has occurred in public transportation, the control unit 111 may increase the utterance speed of the robot 100 as compared with a normal time in which no trouble is occurring in public transportation. When a trouble occurs in public transportation, it is highly probable that many users 10 are in a hurry to cope with the trouble. Even in this case, by increasing the utterance speed of the robot 100, it is possible to quickly notify the user 10 of an alternative means.

### (Sixth embodiment)

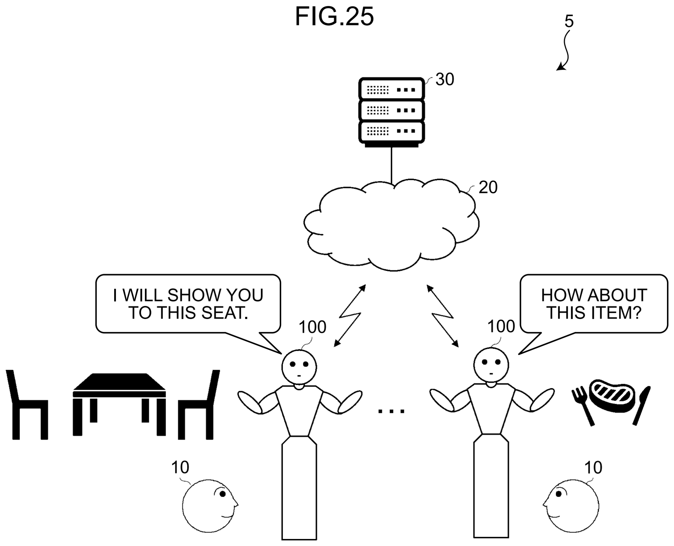

Next, a system 5 according to a sixth embodiment will be described with reference to FIG. 25. The description of the same configuration and the like as those of the above-described embodiment will be omitted. FIG. 25 schematically illustrates an example of an overall configuration of the system 5 according to the sixth embodiment.

The robot 100 is disposed in an arbitrary restaurant. The robot 100 is disposed, for example, in a restaurant which is a chain store. The robot 100 is disposed, for example, in a restaurant that is a private business. The user 10 is a user who uses the robot 100.

The system 5 according to the sixth embodiment uses the robot 100 to execute processing of serving the user 10 visiting the restaurant where the robot 100 is located.

The server 300 has, for example, a function of specifying an attribute of the user 10. For example, the server 300 specifies the attribute of the user 10 based on the sensor information detected by the robot 100. For example, the server 300 may specify the attribute of the user 10 based on membership information of a restaurant where the robot 100 is located.

The attribute of the user 10 includes, for example, an attribute based on the age of the user 10. The attribute of the user 10 includes, for example, an attribute based on the gender of the user 10. The attribute of the user 10 includes, for example, an attribute based on whether the user 10 is a member of a restaurant. The attribute of the user 10 may include an attribute based on other arbitrary information.

The attribute of the user 10 includes, for example, "adult". The attribute of the user 10 includes, for example, "young person". The attribute of the user 10 includes, for example, "elderly person". The attribute of the user 10 includes, for example, "child". The attribute of the user 10 includes, for example, "male". The attribute of the user 10 includes, for example, "female". The attribute of the user 10 includes, for example, "member". The attribute of the user 10 includes, for example, "non-member".

The system 5 according to the sixth embodiment has a function of specifying an attribute of a group including a plurality of users 10, for example. For example, the server 300 specifies the attribute of the group based on the sensor information detected by the robot 100.

The attribute of the group includes, for example, "family". The attribute of the group includes, for example, "drinking party". The attribute of the group includes, for example, "elderly couple". The group attribute may include any other group.

The server 300 has a function of deciding customer service content in which the robot 100 serves the user 10, for example. For example, the server 300 decides the customer service content based on the attribute of the user 10. For example, the server 300 decides the customer service content based on membership information of a restaurant where the robot 100 is located. The server 300 decides the customer service content based on, for example, external information such as weather information in a predetermined range including the restaurant, map information in a predetermined range including the restaurant, or news information, etc. The server 300 may decide the customer service content based on the time zone in which the robot 100 serves the user 10. As described above, the robot 100 may execute a part or all of the processing of deciding the customer service content.

For example, the server 300 decides the customer service content so as to enhance the hospitality for the user 10. For example, the server 300 decides the customer service content so as to provide more personalized service to the user 10.

For example, the server 300 decides greetings to be given by the robot 100 to the user 10 who has visited the restaurant. For example, when the attribute of the user 10 is specified as "young person", the server 300 decides that the robot 100 performs a greeting that can give a friendly impression to the user 10. Furthermore, for example, in a case where the attribute of the user 10 is specified as "elderly person", the server 300 decides that the robot 100 performs a greeting that can give a polite impression to the user 10.

For example, the server 300 decides a seat for the user 10. The server 300 decides, for example, a seat suggested by the robot 100 to the user 10. The server 300 decides, for example, a seat to be guided by the robot 100 to the user 10.

For example, in a case where the attribute of the user 10 is specified as "young person", the server 300 decides a table seat as the seat of the user 10.
Furthermore, for example, in a case where the attribute of the user 10 is specified as "elderly person", the server 300 decides a counter seat as the seat of the user 10.

For example, in a case where the attribute of the group including the plurality of users 10 is specified as "elderly couple", the server 300 decides a calm seat as the seat of the plurality of users 10. Furthermore, for example, in a case where the attribute of the group including the plurality of users 10 is specified as "family", the server 300 decides a seat with a short distance to the restroom as the seat of the plurality of users 10.

The server 300 decides an item to be suggested by the robot 100 to the user 10, for example. For example, in a case where the attribute of the user 10 is specified as "young person", the server 300 decides to suggest an item with a generous portion to the user 10. Furthermore, for example, in a case where the attribute of the user 10 is specified as "elderly person", the server 300 decides to suggest a healthy item to the user 10.

The server 300 decides an item to be suggested by the robot 100 to a plurality of users 10, for example. For example, in a case where the attribute of the group including the plurality of users 10 is specified as "drinking party", the server 300 decides to suggest an all-you-can-drink course to the plurality of users 10. Furthermore, for example, in a case where the attribute of the group including the plurality of users 10 is specified as "family", the server 300 decides to suggest a kid's meal to the plurality of users 10.

For example, the server 300 decides an item to be suggested to the user 10 further based on a time zone in which the robot 100 serves the user 10. For example, in a case where the attribute of the user 10 is specified as "elderly person", and the time zone in which the robot 100 serves the user 10 is the morning time zone, the server 300 decides to suggest an item of the breakfast special to the user 10. For example, in a case where the attribute of the user 10 is specified as "young person", and the time zone in which the robot 100 serves the user 10 is the morning time zone, the server 300 decides to suggest the item of the permanent menu to the user 10.

For example, the server 300 decides an item to be suggested to the user 10 further based on the news information. For example, in a case where the attribute of the user 10 is specified as "young person", the server 300 decides to suggest pancake to the user 10 based on news information of "Pancakes are popular among young people.".

For example, the server 300 decides a content to assist the payment procedures of the user 10. For example, in a case where the attribute of the user 10 is specified as "young person", the server 300 decides to notify the user 10 of the electronic money available at the restaurant. For example, in a case where the attribute of the user 10 is specified as "elderly person", the server 300 decides to notify the user 10 of the credit card available at the restaurant.

For example, the server 300 decides a customer send-off action to be performed by the robot 100 to the user 10 leaving the restaurant. For example, when the attribute of the user 10 is specified as "young person", the server 300 decides that the robot 100 performs a customer send-off action that may give a friendly impression to the user 10. Furthermore, for example, in a case where the attribute of the user 10 is specified to be "elderly", the server 300 decides that the robot 100 performs a customer send-off action that can give a polite impression to the user 10.

For example, the server 300 decides a customer send-off action to be performed by the robot 100 for the user 10 further based on weather information. For example, in a case where the weather around the restaurant indicated by the weather information indicated "rain" when the user 10 visits the restaurant and indicates "clear" when the user 10 leaves the store, the server 300 decides that the robot 100 warns the user 10 not to leave the umbrella behind.

The system 5 according to the sixth embodiment specifies the attributes of the user 10 who has visited the restaurant and decides the customer service content of the robot 100 for serving the user 10 so as to further enhance the hospitality to the user 10 based on the specified attributes. With this configuration, the user 10 can receive personalized service with high hospitality from the robot 100, enabling the system 5 according to the sixth embodiment to achieve a customer service in which the robot 100 serves the user 10 with consideration to make the user 10 feel happy.

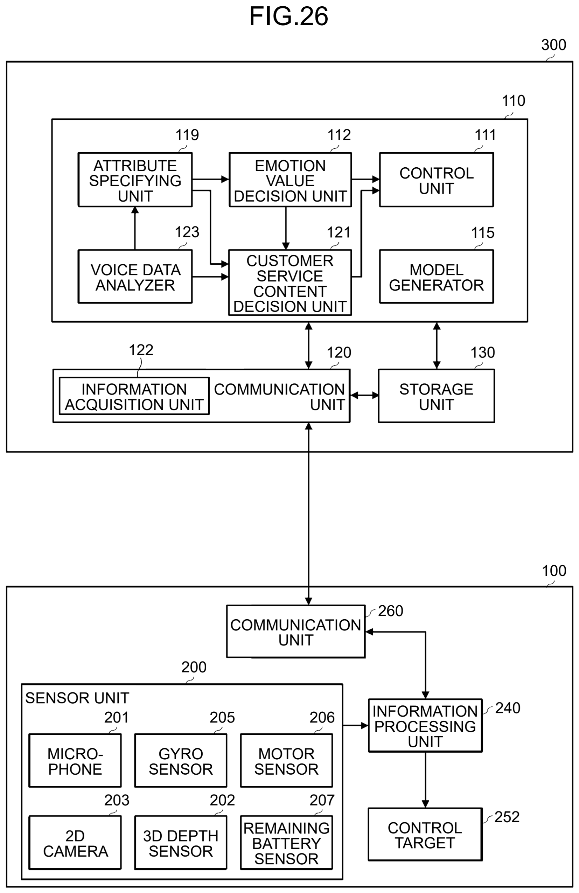

FIG. 26 schematically illustrates functional block configurations of the robot 100 and the server 300. The server 300 includes an information processing unit 110, a communication unit 120, and a storage unit 130. The information processing unit 110 includes a control unit 111, an attribute specifying unit 119, a customer service content decision unit 121, a voice data analyzer 123, an emotion value decision unit 112, and a model generator 115. The information processing unit 110 is not necessarily required to include all of these.

The communication unit 120 may communicate with a sensor device installed in a restaurant where the robot 100 is located. The sensor device includes a camera, for example. The sensor device includes a microphone, for example. The sensor device includes an infrared sensor, for example. The sensor device may include other external devices. The external device includes a weather information management server that manages weather information, for example. The external device includes a news information management server that manages news information, for example. The external device may include any other device. The communication unit 120 may be a communication device such as a network IF.

The information acquisition unit 122 acquires, for example, sensor information detected by a sensor device installed in a restaurant where the robot 100 is located.

The information acquisition unit 122 acquires, for example, customer service target related information related to a customer service target visiting a restaurant. For example, when a plurality of customer service targets is visiting a restaurant, the information acquisition unit 122 acquires customer service target related information of each of the plurality of customer service targets.

The customer service target related information includes image data of a customer service target, for example. The customer service target related information includes voice data of a customer service target, for example. The customer service target related information may include any other data related to the customer service target.

The information acquisition unit 122 may acquire weather information in a predetermined range including a restaurant where the robot 100 is located. The information acquisition unit 122 may acquire news information related to a restaurant where the robot 100 is located. The information acquisition unit 122 acquires, for example, news information related to an item being sold by the restaurant.

The storage unit 130 stores, for example, candidate customer service content which are candidates for the customer service content of a customer service target to be served by the robot 100. The storage unit 130 stores, for example, candidate customer service content for each attribute of a customer service target. The storage unit 130 stores, for example, candidate customer service content for each attribute of a group including a plurality of customer service targets.

The candidate customer service content includes an action pattern that the robot 100 performs on one or more customer service targets, for example. The action pattern includes, for example, greetings. The action pattern includes, for example, decision of a seat. The action pattern includes, for example, a suggestion of a seat. The action pattern includes, for example, guidance of a seat. The action pattern includes, for example, suggestion of an item. The action pattern includes, for example, an answer. The action pattern includes, for example, assistance in payment procedures. The action pattern includes a customer send-off action, for example. The action pattern may include any other action.

The candidate customer service content includes, for example, an output mode in which the robot 100 outputs various types of information when the robot 100 serves one or more customer service targets in accordance with the action pattern. The output mode may include the content of the display output. The output mode may include content of voice output. The output mode may include a tone of the voice of the robot 100. The output mode may include an utterance speed of the robot 100. The output mode may include information of an amount of pausing of the robot 100. The output mode may include the content of the body motion of the robot 100. The output mode may include information of gesture of the robot 100. The output mode may include information of the degree of nodding performed with the customer service target of the robot 100.

The storage unit 130 stores, for example, seat related information related to a seat of a restaurant where the robot 100 is located. The seat related information includes, for example, seat layout information indicating layout of seats of the restaurant. The seat related information may include seat type information indicating a seat type of the restaurant. The seat includes, for example, a table seat. The seat includes, for example, a counter seat.

The storage unit 130 stores, for example, menu information indicating a menu of a restaurant where the robot 100 is located. The storage unit 130 stores, for example, sales history information indicating a sales history of each item in the menu indicated by the menu information. In a case where the restaurant is a chain store, for example, the storage unit 130 stores sales history information of each restaurant including the restaurant where the robot 100 is located.

The storage unit 130 stores, for example, sales history information of each item in association with an attribute of a customer service target to which each item has been sold. The storage unit 130 stores, for example, sales history information of each item in association with an attribute of a group including a plurality of customer service targets to which each item has been sold.

The storage unit 130 stores, for example, sales history information of each item in further association with weather information around a restaurant when each item is sold. For example, the storage unit 130 stores the sales history information of each item in further association with a time zone when each item is sold.

The storage unit 130 may store membership information of a restaurant where the robot 100 is located. The membership information includes, for example, identification information for identifying the member. The identification information includes, for example, image data of the face of the member. The identification information includes, for example, name information. The identification information includes, for example, a phone number of a phone owned by the member. The identification information may include any other information by which the member can be identified. The membership information includes, for example, age information indicating the age of the member. The membership information includes, for example, gender information indicating the gender of the member. The membership information includes, for example, family structure information indicating a family structure of the member. The membership information may include other arbitrary information.

The attribute specifying unit 119 specifies an attribute of a customer service target. For example, the attribute specifying unit 119 specifies the attribute of the customer service target based on the customer service target related information acquired by the information acquisition unit 122. For example, the attribute specifying unit 119 specifies the attribute of the customer service target by performing image analysis on the image data of the customer service target included in the customer service target related information. For example, the attribute specifying unit 119 specifies the attribute of the customer service target by performing voice analysis on the voice data of the customer service target included in the customer service target related information.

The attribute specifying unit 119 may specify the attribute of the customer service target based on the membership information stored in the storage unit 130. For example, the attribute specifying unit 119 causes the robot 100 to ask the customer service target to answer the identification information included in the membership information. Thereafter, the attribute specifying unit 119 specifies the attribute of the customer service target from the membership information stored in the storage unit 130 in association with the identification information included in the answer of the customer service target to the question posed by the robot 100. The attribute specifying unit 119 may check the matching between image data of the face of the customer service target with image data of the face of the member stored in the storage unit 130, and may specify the attribute of the customer service target from the membership information stored in the storage unit 130 in association with the image data of the face of the member matching the image data of the face of the customer service target.

For example, when a plurality of customer service targets is visiting a restaurant, the attribute specifying unit 119 specifies the attribute of each of the plurality of customer service targets based on the customer service target related information of each of the plurality of customer service targets acquired by the information acquisition unit 122. Corresponding to the specifying of the attribute of each of the plurality of customer service targets, the attribute specifying unit 119 may further specify the attribute of the group including the plurality of customer service targets based on the specified attribute of each of the plurality of customer service targets.

For example, in a case where the attributes of the four customer service targets who have visited the restaurant are specified as "adult male", "adult female", "boy", and "girl", the attribute specifying unit 119 specifies that the attribute of the group including the four customer service targets is "family". Furthermore, for example, in a case where each attribute of the six customer service targets visiting the restaurant is specified as "young person", "young person", "young person", "young woman", "young woman", and "young woman", the attribute specifying unit 119 specifies that the attribute of the group including the six customer service targets is "drinking party". Furthermore, for example, in a case where the attributes of the two customer service targets who have visited the restaurant are specified as "elderly male" and "elderly female", the attribute specifying unit 119 specifies that the attribute of the group including the two customer service targets is "elderly couple".

The customer service content decision unit 121 decides customer service content with which the robot 100 serves one or more customer service targets. For example, the customer service content decision unit 121 decides the customer service content from among a plurality of pieces of candidate customer service content stored in the storage unit 130.

For example, the customer service content decision unit 121 decides the customer service content with which the robot 100 serves the customer service target based on the attribute of the customer service target specified by the attribute specifying unit 119. For example, the customer service content decision unit 121 decides the customer service content so as to enhance the hospitality for the customer service target. For example, the customer service content decision unit 121 decides the customer service content so as to provide a more personalized customer service to the customer service target.

For example, the customer service content decision unit 121 decides the customer service content in which the robot 100 serves the plurality of customer service targets based on the attribute of the group including the plurality of customer service targets specified by the attribute specifying unit 119. For example, the customer service content decision unit 121 decides the customer service content so as to enhance the hospitality for the plurality of customer service targets.

The customer service content decision unit 121 may decide the customer service content with which the robot 100 serves one or more customer service targets further based on the weather information acquired by the information acquisition unit 122. The customer service content decision unit 121 may decide the customer service content further based on a time zone in which the robot 100 serves one or more customer service targets.

For example, the customer service content decision unit 121 decides that the robot 100 greets one or more customer service targets visiting the restaurant. The customer service content decision unit 121 decides that one or more customer service targets are visiting the restaurant based on, for example, sensor information detected by the sensor unit 200 of the robot 100 or a sensor device installed in the restaurant.

For example, the customer service content decision unit 121 decides greetings to be given by the robot 100 to the customer service target based on the attribute of the customer service target specified by the attribute specifying unit 119. For example, the customer service content decision unit 121 decides a greeting to be given to the customer service target by the robot 100 so that the customer service target will have a more positive emotion.

For example, the customer service content decision unit 121 decides greetings to be given by the robot 100 to a plurality of customer service targets based on the attribute of the group including the plurality of customer service targets specified by the attribute specifying unit 119. For example, the customer service content decision unit 121 decides greetings to be given by the robot 100 to the plurality of customer service targets so that the plurality of customer service targets will have more positive emotions.

The customer service content decision unit 121 decides one or more customer service target seats, for example. The customer service content decision unit 121 decides, for example, one or more seats for the one or more customer service targets in response to the decision that the one or more customer service targets are visiting the restaurant. The customer service content decision unit 121 decides one or more seats corresponding to one or more customer service targets corresponding to the completion of greetings to one or more customer service targets by the robot 100, for example.

The customer service content decision unit 121 decides the seat of the customer service target based on the attribute of the customer service target specified by the attribute specifying unit 119 and the seat related information stored in the storage unit 130, for example. The customer service content decision unit 121 decides a seat for the customer service target so that the customer service target will have a more positive emotion, for example.

For example, the customer service content decision unit 121 decides the seats of the plurality of customer service targets based on the attribute of the group including the plurality of customer service targets specified by the attribute specifying unit 119 and the seat related information. For example, the customer service content decision unit 121 decides the seats of the plurality of customer service targets so that the plurality of customer service targets will have more positive emotions.

The customer service content decision unit 121 decides, for example, the type of one or more customer service target seats. The customer service content decision unit 121 decides, for example, the layout of one or more customer service target seats.

For example, the customer service content decision unit 121 decides that the robot 100 will suggest one or more decided customer service target seats to one or more customer service targets. For example, the customer service content decision unit 121 decides that the robot 100 will guide one or more customer service targets to the decided one or more customer service target seats.

For example, the customer service content decision unit 121 decides that the robot 100 will suggest an item to one or more customer service targets. For example, the customer service content decision unit 121 decides that the robot 100 will suggest an item to one or more customer service targets at a timing when the robot 100 accepts an order from one or more customer service targets. The customer service content decision unit 121 may decide that the robot 100 will suggest a recommended item to one or more customer service targets when the robot 100 is asked of the recommended item by the one or more customer service targets.

The customer service content decision unit 121 decides an item to be suggested by the robot 100 to the customer service target based on, for example, the attribute of the customer service target specified by the attribute specifying unit 119 and the menu information of the restaurant where the robot 100 is located, stored in the storage unit 130. For example, the customer service content decision unit 121 decides an item to be suggested by the robot 100 to the customer service target so that the customer service target will have a more positive emotion.

For example, the customer service content decision unit 121 decides the item to be suggested by the robot 100 to the plurality of customer service targets based on the attribute of the group including the plurality of customer service targets specified by the attribute specifying unit 119 and the menu information of the restaurant. For example, the customer service content decision unit 121 decides an item to be suggested by the robot 100 to the plurality of customer service targets so that the plurality of customer service targets will have more positive emotions.

For example, the customer service content decision unit 121 decides an item to be suggested by the robot 100 to one or more customer service targets further based on a sales history of each item of the restaurant where the robot 100 is located, indicated by the sales history information stored in the storage unit 130. For example, the customer service content decision unit 121 decides an item with a larger number of items sold among a plurality of items included in the menu indicated by the menu information of the restaurant as an item to be suggested by the robot 100 to one or more customer service targets. For example, the customer service content decision unit 121 decides, as the item to be suggested by the robot 100 to the customer service target, an item with a larger number of items sold to the customer service target with the attribute specified by the attribute specifying unit 119 among the plurality of items. For example, the customer service content decision unit 121 decides an item with a larger number of items sold to a plurality of customer service targets constituting a group of attributes specified by the attribute specifying unit 119 among the plurality of items, as the item to be suggested by the robot 100 to the plurality of customer service targets.

For example, the customer service content decision unit 121 decides an item to be suggested by the robot 100 to one or more customer service targets further based on weather information acquired by the information acquisition unit 122. For example, the customer service content decision unit 121 decides an item whose sales volume is larger under the weather indicated by the weather information among a plurality of items included in the menu indicated by the menu information of the restaurant, as the item to be suggested by the robot 100 to one or more customer service targets. For example, the customer service content decision unit 121 decides, as the item to be suggested by the robot 100 to the customer service target, an item with a larger number of items sold to the customer service target having an attribute specified by the attribute specifying unit 119 under the weather indicated by the weather information among the plurality of items. For example, the customer service content decision unit 121 decides, as the item to be suggested by the robot 100 to the plurality of customer service targets, an item with a larger number of items sold to the plurality of customer service targets constituting a group having an attribute specified by the attribute specifying unit 119 under the weather indicated by the weather information among the plurality of items. With this configuration, the robot 100 can appropriately suggest an item that is highly likely to be desired by one or more customer service targets and that can change according to the weather.

The customer service content decision unit 121 decides an item to be suggested by the robot 100 to one or more customer service targets further based on a time zone in which the robot 100 serves one or more customer service targets. For example, the customer service content decision unit 121 decides an item with a larger number of items sold in the time zone among a plurality of items included in the menu indicated by the menu information of the restaurant as an item to be suggested by the robot 100 to one or more customer service targets. For example, the customer service content decision unit 121 decides, as the item to be suggested by the robot 100 to the customer service target, an item with a larger number of items sold to the customer service target with the attribute specified by the attribute specifying unit 119 in the time zone among the plurality of items. For example, the customer service content decision unit 121 decides an item with a larger number of items sold to a plurality of customer service targets constituting a group of attributes specified by the attribute specifying unit 119 in the time zone among the plurality of items, as the item to be suggested by the robot 100 to the plurality of customer service targets. With this configuration, the robot 100 can appropriately suggest an item that is highly likely to be desired by one or more customer service targets that can change according to the time zone.

For example, the customer service content decision unit 121 decides an item to be suggested by the robot 100 to one or more customer service targets further based on news information acquired by the information acquisition unit 122. For example, the customer service content decision unit 121 decides an item related to the news information among a plurality of items included in the menu indicated by the menu information of the restaurant as an item to be suggested by the robot 100 to one or more customer service targets. For example, the customer service content decision unit 121 decides an item related to the news information targeting the attribute of the customer service target specified by the attribute specifying unit 119 among the plurality of items, as the item to be suggested by the robot 100 to the customer service target. For example, the customer service content decision unit 121 decides an item related to the news information targeting the attribute of the group including the plurality of customer service targets specified by the attribute specifying unit 119 based on the news information among the plurality of items, as the item to be suggested by the robot 100 to the plurality of customer service targets. With this configuration, the robot 100 can suggest a highly popular item picked up in the news to one or more customer service targets.

For example, the customer service content decision unit 121 decides to assist, with payment procedures, the customer service target for which the robot 100 performs payment procedures. The payment procedures include, for example, payment procedures by self-checkout. The payment procedures may include, for example, payment procedures using any other method.

For example, the customer service content decision unit 121 decides payment procedures support to be offered by the robot 100 to the customer service target based on the attribute of the customer service target specified by the attribute specifying unit 119. For example, the customer service content decision unit 121 decides the payment procedures support to be offered to the customer service target by the robot 100 so that the customer service target will have a more positive emotion.

For example, the customer service content decision unit 121 decides to notify the customer service target of the payment method available in the restaurant where the robot 100 is located. The payment method may include electronic money, a credit card, and cash.

For example, the customer service content decision unit 121 decides to perform a customer send-off action onto one or more customer service targets leaving the restaurant. The customer service content decision unit 121 decides that one or more customer service targets are leaving the restaurant based on, for example, sensor information detected by the sensor unit 200 of the robot 100 or a sensor device installed in the restaurant. For example, the customer service content decision unit 121 decides that one or more customer service targets are leaving the restaurant in response to completion of payment procedures of one or more customer service targets.

For example, the customer service content decision unit 121 decides performing a customer send-off action by the robot 100 to the customer service target based on the attribute of the customer service target specified by the attribute specifying unit 119. For example, the customer service content decision unit 121 decides a customer send-off action to be performed onto the customer service target by the robot 100 so that the customer service target will have a more positive emotion.

For example, the customer service content decision unit 121 decides a customer send-off action to be performed by the robot 100 to a plurality of customer service targets based on the attribute of the group including the plurality of customer service targets specified by the attribute specifying unit 119. For example, the customer service content decision unit 121 decides a customer send-off action to be performed onto the plurality of customer service targets by the robot 100 so that the plurality of customer service targets will have more positive emotions.

The voice data analyzer 123 analyzes voice data acquired by the microphone 201 mounted on the robot 100. For example, the voice data analyzer 123 analyzes whether, while the robot 100 is serving one or more customer service targets, another customer service target who is visiting the restaurant is emitting a voice to the robot 100.

For example, when the analysis result of the voice data obtained by the voice data analyzer 123 indicates that the another customer service target is uttering a voice to the robot 100 while the robot 100 is serving the one or more customer service targets, the customer service content decision unit 121 decides that the robot 100 will reply to the another customer service target. For example, the customer service content decision unit 121 decides that the robot 100 replies "I'm coming.", "Please wait a moment.", or the like to the another customer service target. This makes it possible for the another customer service target to grasp the situation where the robot 100 has recognized the target, enabling reduction of frustration in the another customer service target caused by waiting for the service.

The emotion value decision unit 112 decides an emotion value indicating an emotion of the customer service target. The emotion value decision unit 112 decides, for example, an emotion value of the customer service target being served by the robot 100. The emotion value decision unit 112 decides, for example, an emotion value of a plurality of customer service targets being served by the robot 100. The emotion value of the plurality of customer service targets is a total value of the individual emotion values of the plurality of customer service targets, for example. The emotion value of the plurality of customer service targets may be an average value of the individual emotion values of the plurality of customer service targets, for example.

The emotion value decision unit 112 recognizes the emotion of the customer service target based on the information acquired by the information acquisition unit 122. The emotion value decision unit 112 recognizes the emotion of the customer service target based on, for example, the expression of the customer service target recognized by analyzing the image data captured by the 2D camera 203. The emotion value decision unit 112 recognizes the emotion of the customer service target, for example, by analyzing voice data of the customer service target detected by the microphone 201. In this case, the emotion value decision unit 112 extracts a feature such as a frequency component of a voice, for example, and recognizes the emotion of the customer service target based on the extracted feature.

The emotion value decision unit 112 decides an emotion value of a customer service target based on the recognized emotion of the service target. The emotion value may include the type of the emotion of a customer service target, and a value indicating positive/negative of the emotion of the customer service target and a degree of the emotion. Types of emotions of the customer service target include "delighted", "joyful", "pleasant", "secure", "excited", "relieved", "fulfilled", "angry", "sad", "unpleasant", "anxious", "sorrowful", "worried", and "empty". These are examples, and the type is not limited thereto. The emotion value indicating the positive/negative of the emotion of the customer service target is a value that indicates a positive value when the emotion of the customer service target is a positive emotion accompanied with pleasure or comfort, such as "delighted", "joyful", "pleasant", "secure", "excited", "relieved", and "fulfilled", and the emotion value becomes a larger value as the emotion is more positive. When the emotion of the user is an emotion having a negative feeling, such as "angry", "sad", "unpleasant", "anxious", "sorrowful", "worried", and "empty", the value indicates a negative value, and the absolute value of the negative value is larger as the feeling is more negative. In a case where the emotion of the customer service target is not any of the above ("neutral"), the value indicating positive/negative indicates a value 0.

The storage unit 130 may store learning data. The learning data includes, for example, attribute data indicating an attribute of a customer service target visiting a restaurant, customer service content in which the robot 100 serves the customer service target, and an emotion value of the customer service target when the robot 100 serves the customer service target with the customer service content. The learning data includes, for example, attribute data indicating an attribute of a group including a plurality of customer service targets visiting a restaurant, customer service content in which the robot 100 serves the plurality of customer service targets, and emotion values of the plurality of customer service targets when the robot 100 serves the plurality of customer service targets with the customer service content.

The attribute of the customer service target indicated by the attribute data included in the learning data may be specified by the attribute specifying unit 119. The emotion value of the customer service target included in the learning data may be decided by the emotion value decision unit 112.

The model generator 115 generates, by machine learning, a model that estimates the emotion value. The model generator 115 stores the generated estimation model in the storage unit 130.

For example, the model generator 115 generates, by machine learning, a model that estimates an emotion value of a customer service target. For example, using a plurality of pieces of learning data stored in the storage unit 130 as teaching data, and based on attribute data of the customer service target visiting a restaurant and candidate customer service content with which the robot 100 serves the customer service target, the model generator 115 generates, by machine learning, an estimation model that estimates an emotion value of a customer service target when the robot 100 serves the customer service target with the candidate customer service content.

For example, the model generator 115 generates, by machine learning, a model that estimates emotion values of a plurality of customer service targets. For example, using a plurality of pieces of learning data stored in the storage unit 130 as teaching data, and based on attribute data of a group including the plurality of customer service targets visiting the restaurant and candidate customer service content with which the robot 100 serves the plurality of customer service targets, the model generator 115 generates, by machine learning, an estimation model that estimates emotion values of the plurality of customer service targets when the robot 100 serves the plurality of customer service targets with the candidate customer service content.

Using the estimation model stored in the storage unit 130 and based on the attribute of the customer service target specified by the attribute specifying unit 119 and candidate customer service content stored in the storage unit 130 with which the robot 100 serves the customer service target, the emotion value decision unit 112 may decide the emotion value of the customer service target when the robot 100 serves the customer service target with the candidate customer service content. The customer service content decision unit 121 decides, as the customer service content to be performed on the customer service target, the candidate customer service content decided by the emotion value decision unit 112 to bring about the highest emotion value of the customer service target among the plurality of pieces of candidate customer service content stored in the storage unit 130.

Using the estimation model stored in the storage unit 130 and based on the attribute of the group including a plurality of customer service targets specified by the attribute specifying unit 119 and candidate customer service content with which the robot 100 serves the plurality of customer service targets stored in the storage unit 130, the emotion value decision unit 112 may decide the emotion values of a plurality of customer service targets when the robot 100 serves the plurality of customer service targets with the candidate customer service content. The customer service content decision unit 121 decides, as the customer service content to be performed on the plurality of customer service targets, the candidate customer service content decided by the emotion value decision unit 112 to bring about the highest emotion values of the plurality of customer service targets among the plurality of pieces of candidate customer service content stored in the storage unit 130.

### (Seventh embodiment)

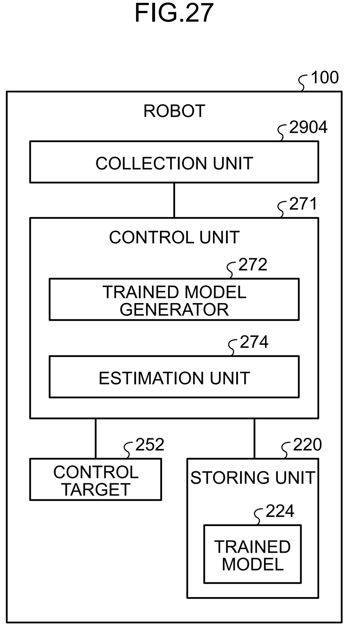

Next, an example of the robot 100 according to a seventh embodiment will be described with reference to FIG. 27. The robot 100 is an example of a presentation device. The description of the same configuration and the like as those of the above-described embodiment will be omitted. FIG. 27 schematically illustrates a functional configuration of the robot 100. The robot 100 presents at least one of an attribute of the user, a reaction of the user, and content. For example, the robot 100 is provided around a TV or a display in a home, a store, or the like (for example, a side of a television set at home, etc.). In the example illustrated in FIG. 27, the robot 100 includes a collection unit 2904, a control unit 271, a control target 252, and a storing unit 220.

The collection unit 2904 collects at least one of user data related to the user, reaction data related to the reaction of the user, and content data related to the content. With this configuration, the collection unit 2904 can accumulate user data, reaction data, and content data. As an example, the collection unit 2904 collects user data related to attributes of the user. As another example, the collection unit 2904 collects user data related to at least one of age, gender, and preference of the user. As another example, the collection unit 2904 may collect user data in which a user is specified by face authentication. For example, the collection unit 2904 collects user data in which an individual family member watching TV at home has been specified by face authentication. The collection unit 2904 may collect reaction data related to at least one of the voice, the expression, and the motion of the user. The collection unit 2904 may collect reaction data including quantified emotions of the user. For example, the collection unit 2904 collects, by the emotion recognition engine, reaction data including quantified emotions such as delight, anger, sadness, and joy of the user recognized from the reaction data related to at least one of the voice and the expression of the user. When collecting the reaction data, the collection unit 2904 may collect data by functioning as an emotion recognition engine to quantify the user's emotion, or may collect reaction data in which the emotion is quantified in advance. Since the emotion recognition method is similar to the methods described in Patent Literatures 3 to 7, the description thereof will be omitted. The emotion recognition method is not limited to these methods, and other known methods may be used. The collection unit 2904 collects content data related to at least one of a TV program and an item. The content data is not limited to a TV program, and may relate to other types of content such as a commercial message (CM) of TV or a moving image such as a moving image distribution service. In addition, the content data related to the item is not limited to the item related to the physical goods, and may include merchandise related to services, rights, information, events, people, and the like.

In the example illustrated in FIG. 27, the control unit 271 includes a trained model generator 272 and an estimation unit 274.

The trained model generator 272 generates the trained model 224 using at least one of the user data, the reaction data, and the content data collected by the collection unit 2904. The trained model 224 functions such that, when at least one of user data, reaction data, and content data has been input, data that has not been input among the user data, the reaction data, and the content data is to be output. As an example, the trained model generator 272 uses the user data, the reaction data, and the content data collected by the collection unit 2904 as teaching data to generate a text generation model having a dialogue function including the trained model 224 that outputs the attribute of the user and the reaction of the user when the content data has been input. As another example, the trained model generator 272 uses user data, reaction data, and content data collected by the collection unit 2904 as teaching data to generate a text generation model having a dialogue function including the trained model 224 that outputs the content data when the user data and the reaction data have been input. The text generation model having a dialogue function is implemented by ChatGPT, for example.

The estimation unit 274 estimates at least one of the attribute of the user, the reaction of the user, and the content by using the trained model 224 trained to output data such that, when at least one of the user data, the reaction data, and the content data collected by the collection unit 2904 has been input, data that has not been input among the user data, the reaction data, and the content data is to be output. As an example, the estimation unit 274 inputs the user data related to the preference of the user collected by the collection unit 2904 to the trained model 224, and estimates at least one of the content preferred by the user and the content not preferred by the user. Specifically, the estimation unit 274 estimates at least one of the content preferred by the user and the content not preferred by the user in relation to at least one of a TV program and an item. More specifically, the estimation unit 274 estimates at least one of information related to a TV program preferred by the user (such as detailed information related to a TV program recommended to the user and its related program) and information related to an item preferred by the user (such as detailed information related to an item recommended to the user and purchase information).

As another example, the estimation unit 274 inputs the user data related to at least one of the age and the gender of the user collected by the collection unit 2904 to the trained model 224 to estimate at least one of the user's reaction and the content. As another example, the estimation unit 274 inputs the user data in which the user is specified by the face authentication collected by the collection unit 2904 to the trained model 224 to estimate at least one of the reaction of the user and the content. As another example, the estimation unit 274 inputs reaction data related to at least one of the voice, the expression, and the motion of the user collected by the collection unit 2904 to the trained model 224 to estimate at least one of the attribute of the user and the content. As another example, the estimation unit 274 inputs the content data related to at least one of the TV program and the item collected by the collection unit 2904 to the trained model 224 to estimate at least one of the attribute of the user and the reaction of the user. By causing the control target 252 to present the data estimated by each of the above-described examples, the estimation unit 274 can allow a content production side such as a TV producer or a recorder to grasp more detailed attributes of the user and a true reaction of the user, and can prompt the user to search for detailed information or to perform a purchasing action on an item. This makes it possible for the estimation unit 274 to verify the effect of the content more sufficiently.

The estimation unit 274 may estimate at least one of the attribute of the user, the reaction of the user, and the content by using the text generation model including the trained model 224 and having the dialogue function. By causing the control target 252 to present the estimated data, the estimation unit 274 can allow the content production side to grasp more detailed attributes of the user and a true reaction of the user, and can prompt the user to search for detailed information and take an action of purchasing the item. This makes it possible for the estimation unit 274 to verify the effect of the content more sufficiently. For example, in a case where the information related to the item is presented to the user by the robot 100 such as Pepper and the user asks about the detailed information of the item, the estimation unit 274 can estimate detailed information of the item asked by the user using the text generation model having the dialogue function such as ChatGPT and including the trained model 224, and can cause the control target 252 such as a tablet to additionally present the detailed information. With this configuration, the estimation unit 274 can promote the purchasing action such as causing the user to perform the purchasing action on the spot, and can allow the content production side such as the producer of the TV program or the production side of the TV CM to grasp the direct economic effect on the provision of TV programs or TV CMs. The estimation unit 274 may determine whether the numerical value of the emotion indicated by the reaction data collected by the collection unit 2904 exceeds a predetermined range. For example, the estimation unit 274 determines whether the numerical value of the emotion indicated by the reaction data collected by the collection unit 2904 exceeds a high threshold or a low threshold.

The control target 252 presents at least one of the attribute of the user, the reaction of the user, and the content, having been estimated by the estimation unit 274. The control target 252 can sufficiently verify the effect of the content by presenting at least one of the attribute of the user, the reaction of the user, and the content, having been estimated using the trained model 224. The control target 252 may present at least one of the attribute of the user and the reaction of the user to the content production side in a case where at least one of the attribute of the user and the reaction of the user has been estimated by the estimation unit 274, and may present the content to the user in a case where the content has been estimated by the estimation unit 274. The control target 252 sends feedback of the attribute of the user to the content production side, enabling the content production side to grasp the attribute of the user such as the profile of the user. By presenting the user's reaction to the content production side, the control target 252 can allow the content production side to grasp not the mere TV viewing rate but the user's true reaction that is higher in reality than the TV viewing rate. By presenting content to the user, the control target 252 can link information introduced in a TV program to the user's search for detailed information of an item or purchasing action. The presentation method by the control target 252 is not particularly limited, and for example, in a case where the control target 252 is the speaker 2522 (voice output unit), the presentation may be performed by outputting a voice; in a case where the control target 252 is the display device 2521 (display unit), the presentation may be performed by displaying texts and the like; and in a case where the presentation target is the content production side, the presentation may be performed via communication.

As an example, in a case where at least one of the attribute of the user and the reaction of the user has been estimated by the estimation unit 274, the control target 252 presents the attribute of the user including the profile of the user and the reaction of the user in which the user's emotions such as delight, anger, sadness, and joy are quantified, to the production side of the TV program and the production side of the TV CM. As another example, the control target 252 performs, onto the user, at least either one of presentation of content preferred by the user estimated by the estimation unit 274 or warning of content not preferred by the user. Specifically, the control target 252 presents the user's favorite content related to at least one of the TV program and the item estimated by the estimation unit 274, and warns the user of content that is not preferred by the user. More specifically, the control target 252 presents, to the user, at least one of information related to a TV program preferred by the user (detailed information related to the TV program recommended to the user or its related program) and information related to an item preferred by the user (such as detailed information related to an item recommended to the user and purchase information), having been estimated by the estimation unit 274. This makes it possible for the control target 252 to perform one of these presentations toward the user in real time. Furthermore, the control target 252 can present an item to the user in real time so as to prompt the user to perform a search for detailed information and a purchase action, making it possible to verify the effect of the content more sufficiently.

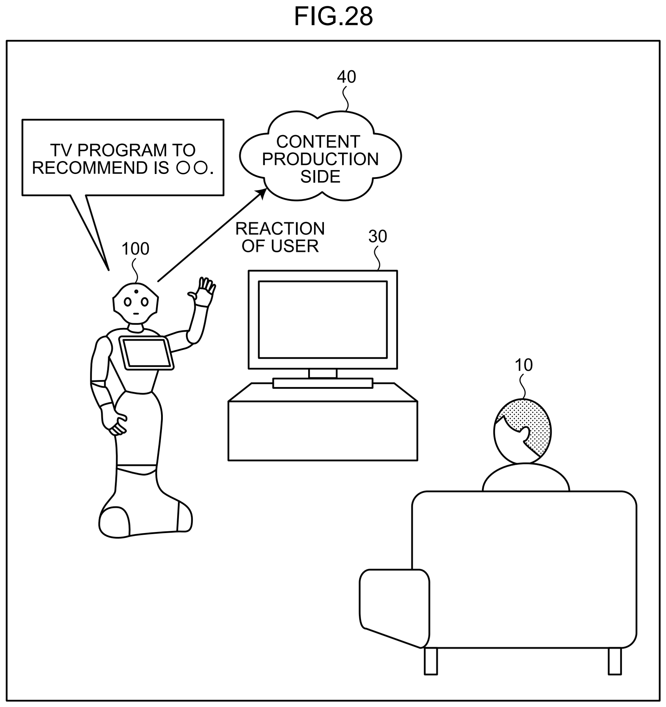

In a case where the estimation unit 274 determines that the numerical value of the emotion exceeds the predetermined range, the control target 252 may perform at least one of presentation of the reaction of the user to the content production side and presentation of the content to the user. With this configuration, the control target 252 can send feedback of the user's reaction to the content production side or present the content to the user only in a case where the user's emotion is strong emotion or weak emotion. Hereinafter, an example of presentation by the control target 252 will be described with reference to FIG. 28. FIG. 28 is a diagram for illustrating an example of the robot 100 according to the seventh embodiment. In the example illustrated in FIG. 28, the robot 100 is a robot such as Pepper and is disposed beside the TV 30. In a case where the estimation unit 274 determines that the numerical value of the emotion of the user 10 exceeds the high threshold, in other words, in a case where the emotion of the user 10 is determined to be a strong emotion such as fun, favorite, boring, or dislike, the control target 252 presents the reaction of the user 10 to the content production side 40 via communication as illustrated in FIG. 28. In a case where the estimation unit 274 determines that the numerical value of the emotion exceeds the high threshold, the control target 252 presents, to the user 10, information related to the program of the TV 30 recommended to the user 10 automatically collected by the collection unit 2904 of the robot 100 as illustrated in FIG. 28. In a case where the estimation unit 274 determines that the numerical value of the emotion exceeds the high threshold, the control target 252 presents a program of the TV30 recommended for another time zone to the user 10 as illustrated in FIG. 28 based on information (genre, performer, time zone, and the like of program of TV 30) related to the program of the TV 30 collected (recorded) by the collection unit 2904. In a case where the estimation unit 274 determines that the numerical value of the emotion is less than the low threshold, that is, in a case where the numerical value of the emotion is determined to be a weak emotion such as boredom or bad mood, the control target 252 presents a previously recorded recommended program for the TV 30 to the user 10 as illustrated in FIG. 28.

The storing unit 220 stores various data and various programs such as user data, reaction data, content data, and the trained model 224.

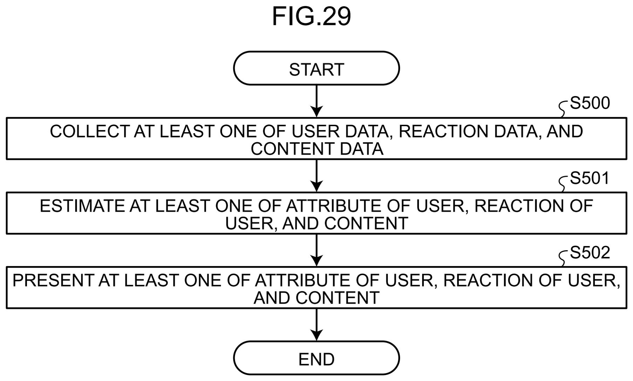

Next, an example of processing performed by the robot 100 according to the seventh embodiment will be described with reference to FIG. 29. FIG. 29 schematically illustrates an example of an operation flow performed by the robot 100 according to the seventh embodiment.

In step S500, the collection unit 2904 collects at least one of the user data related to the user, the reaction data related to the reaction of the user, and the content data related to the content. For example, the collection unit 2904 collects at least one of the user data, the reaction data, and the content data when having received a request related to verification of the effect of the content from the content production side.

In step S501, the estimation unit 274 estimates at least one of the attribute of the user, the reaction of the user, and the content by using the trained model 224 trained to output data such that, when at least one of the user data, the reaction data, and the content data collected by the collection unit 2904 has been input, data that has not been input among the user data, the reaction data, and the content data is to be output.

In step S502, the control target 252 presents at least one of the attribute of the user, the reaction of the user, and the content, that have been estimated by the estimation unit 274. For example, the control target 252 presents at least one of the attribute of the user and the reaction of the user to the content production side in a case where at least one of the attribute of the user and the reaction of the user has been estimated by the estimation unit 274, and presents the content to the user in a case where the content has been estimated by the estimation unit 274.

While the present invention has been described using the embodiments, the technical scope of the present invention is not limited to the scope described in the above embodiments. It is apparent to those skilled in the art that various modifications or improvements can be made to the above embodiments. It is apparent from the description of the claims that modes to which such changes or improvements have been added can also be included in the technical scope of the present invention.

It should be noted that the order of execution of each processing such as operations, procedures, steps, and stages in the devices, systems, programs, and methods illustrated in the claims, the specification, and the drawings can be implemented in any order unless "before", "prior to", or the like is explicitly stated, and unless the output of the previous processing is to be used in the subsequent processing. Descriptions using "First,", "Next,", and the like used for convenience in the operation flows in the claims, specification, and the drawings are not intended to indicate that it is essential to perform operations in the order described.

### (Supplement)

The present technology can also have the following configurations.
(1) A judicial ruling assistant device, being provided as one or more judicial ruling assistant devices,
   the judicial ruling assistant device including:
   an acquisition unit that acquires at least one of legal data related to law, judgment data related to a judgment, case data related to a case, and trial data related to a trial; and
   a judicial ruling assisting unit that assists a judicial ruling based on at least one of the legal data, the judgment data, the case data, and the trial data, having been acquired by the acquisition unit.
(2) A control system including:
   an alternative means specifying unit that specifies an alternative means corresponding to a trouble when the trouble has occurred in public transportation; and
   a control unit that functions such that, when an electronic device disposed in the public transportation has received an inquiry from a user of the public transportation, the control unit causes the electronic device to output, to the user, an explanation of the alternative means specified by the alternative means specifying unit.

### Reference Signs List

- 5: SYSTEM

- 10, 11, 12: USER
- 20: COMMUNICATION NETWORK
- 100, 101, 102: ROBOT
- 200: SENSOR UNIT
- 201: MICROPHONE
- 202: 3D DEPTH SENSOR
- 203: 2D CAMERA
- 204: DISTANCE SENSOR
- 210: SENSOR MODULE UNIT
- 211: VOICE EMOTION RECOGNITION UNIT
- 212: UTTERANCE COMPREHENSION UNIT
- 213: EXPRESSION RECOGNITION UNIT
- 214: FACE RECOGNITION UNIT
- 220: STORING UNIT
- 221: REACTION RULE
- 222: HISTORY DATA
- 223: CHARACTER DATA
- 230: USER STATE RECOGNITION UNIT
- 232: EMOTION DECISION UNIT
- 234: ACTION RECOGNITION UNIT
- 236: ACTION DECISION UNIT
- 238: STORAGE CONTROL UNIT
- 250: ACTION CONTROL UNIT
- 252: CONTROL TARGET
- 280: COMMUNICATION PROCESSING UNIT
- 290: OUTPUT UNIT
- 300: SERVER
- 1200: COMPUTER
- 1210: HOST CONTROLLER
- 1212: CPU
- 1214: RAM
- 1216: GRAPHICS CONTROLLER
- 1218: DISPLAY DEVICE
- 1220: INPUT/OUTPUT CONTROLLER
- 1222: COMMUNICATION INTERFACE
- 1224: STORAGE DEVICE
- 1226: DVD DRIVE
- 1227: DVD-ROM
- 1230: ROM
- 1240: INPUT/OUTPUT CHIP
- 2901: RECOGNITION UNIT
- 2902: OUTPUT CONTROLLER
- 2911: DETECTION INFORMATION

## Claims

1. An action control system comprising:
a recognition unit that recognizes a state of a user based on detection information detected from the user; and
an output controller that causes an electronic device including a text generation model to output a response to the user in accordance with the state of the user recognized by the recognition unit.

2. The action control system according to claim 1,
wherein the recognition unit recognizes an emotion of the user based on the detection information, and
the output controller causes the electronic device to output the response to the user in accordance with the emotion of the user.

3. The action control system according to claim 1,
wherein the output controller causes the electronic device to output the response to the user in accordance with a history of the detection information and the state of the user.

4. The action control system according to claim 1,
wherein the recognition unit recognizes whether the user is lost in a route to a destination based on the detection information, and
in a case where the user is lost in the route to the destination, the output controller causes the electronic device to output a response related to guidance of the route.

5. The action control system according to claim 4,
wherein the output controller causes the electronic device to output the response related to guidance of the route in accordance with the detection information.

6. The action control system according to claim 4,
wherein the output controller causes the electronic device to output the response related to guidance of the route in accordance with the emotion of the user based on the detection information.

7. The action control system according to claim 1,
wherein the output controller causes the electronic device to output a response related to a suggestion of a transaction target according to the state of the user.

8. The action control system according to claim 1,
wherein the output controller causes the electronic device to output a gesture corresponding to the state of the user.

9. The action control system according to claim 1,
wherein the electronic device is either mounted on a stuffed toy or connected, by a wireless or wired link, to a control target device mounted on the stuffed toy.

10. An action control system comprising:
a collection unit that collects situation information indicating a situation of a user viewing an artwork; and
an output controller that controls an electronic device including a text generation model to perform an action corresponding to the situation information collected by the collection unit.

11. An action control system comprising:
a storage unit that stores a talk step including a plurality of talk scripts prescribing talk content of sales talk to a customer by an electronic device;
an emotion value decision unit that decides an emotion value indicating an emotion of the customer while the electronic device is talking with the customer based on one talk step of a plurality of the talk steps stored in the storage unit; and
a selection unit that selects, based on the emotion value of the customer decided by the emotion value decision unit, a talk step next to the one talk step from among the plurality of talk steps stored in the storage unit so as to increase a customer satisfaction level achieved by a sales activity by the electronic device.

12. An action control system comprising:
an information acquisition unit that acquires customer service target related information related to a customer service target visiting a restaurant;
an attribute specifying unit that specifies an attribute of the customer service target based on the customer service target related information acquired by the information acquisition unit; and
a customer service content decision unit that decides, based on the attribute of the customer service target specified by the attribute specifying unit, customer service content with which the electronic device serves the customer service target so as to enhance hospitality for the customer service target.

13. An action control system comprising:
a collection unit that collects at least one of user data related to a user, reaction data related to a reaction of the user, and content data related to content; and
an estimation unit that estimates at least one of an attribute of the user, a reaction of the user, and the content by using a trained model trained to output data such that, when at least one of the user data, the reaction data, and the content data collected by the collection unit is input, data that has not been input among the user data, the reaction data, and the content data is to be output; and
a presentation unit that presents at least one of the attribute of the user, the reaction of the user, and the content, having been estimated by the estimation unit.
